# EUROPEAN PATENT SPECIFICATION

(11) **EP 4 379 163 B1**
(45) Date of publication and mention of the grant of the patent: **12.11.2025**
(21) Application number: 21951790.1
(22) Date of filing: 27.07.2021
(51) Int. Cl.: E04F 13/08

(54) **ATTACHMENT STRUCTURE FOR POLYGONAL PANEL**
BEFESTIGUNGSSTRUKTUR FÜR VIELECKIGES PANEEL
STRUCTURE DE FIXATION DESTINÉE À UN PANNEAU POLYGONAL

(43) Date of publication of application: 05.06.2024
(73) Proprietor: Yasuda Co., Ltd., Osaka-shi, Osaka 542-0081 (JP)
(72) Inventor: YASUDA, Makoto, Osaka-shi, Osaka 542-0081 (JP); HARADA, Yoshimasa, Osaka-shi, Osaka 542-0081 (JP); MATSUO, Kazuo, Yawata-shi, Kyoto 614-8352 (JP)
(74) Representative: Kuhnen & Wacker Patent- und Rechtsanwaltsbüro PartG mbB
(86) International application number: PCT/JP2021/027713
(87) International publication number: WO 2023/007580

(56) References cited:
- WO-A1-86/03539
- CH-A5- 659 679
- JP-A- 2004 108 043
- JP-A- 2008 144 492
- JP-A- 2011 157 699
- JP-A- H07 102 671
- JP-U- H04 132 127
- KR-B1- 102 000 262

## Description

### Technical Field

The present invention relates to a mounting structure for a polygonal panel that is mounted on a wall, a roof, a ceiling, or the like of a building.

### Background Art

Conventional mounting structures for a wall panel to be mounted on a wall of a building include a mounting structure in which at least one worker lifts the wall panel, and another worker bolts or screws the wall panel in place using metal fittings (JP 2004-092020 A).

Such a wall panel mounting structure requires at least two workers, and a worker who lifts the wall panel must keep lifting the wall panel while another worker bolts or screws, which is strenuous for the lifting worker. The mounting structure also has a problem in that the wall panel cannot be mounted by a single worker.

Therefore, as a mounting structure that significantly facilitates mounting work for a wall panel and enables a single worker to perform the mounting work, a mounting structure as described below has been devised: a male member attached to a wall panel and a receiving member with a female portion attached to a wall are used, and in a state where the male member has been forcibly fitted into the female portion while deformed under the pushing force of the wall panel in a direction toward the receiving member, the male member is restored in the female portion to prevent its detachment (JP 2008-144492 A).

Such a wall panel mounting structure is excellent in durability even after many years of use because the male member attached to the wall panel and the receiving member with the female portion attached to the wall are firmly fitted to each other.
KR 102 000 262 B1 teaches an open joint type outer wall panel fixing apparatus, and more specifically, to an open joint type outer wall panel fixing apparatus, which hangs a coupling support unit (20) formed by a female and male structure on a support rod (11) of a connection member (10) to fix the same to minimize screw fastening and improve constructability, absorbs impact through an elastic member (11a) surrounded on an outer circumferential surface of the support rod (11) and prevents generation of a noise.
WO 86/03539 A1 discloses a method of mounting equipment in a hospital room or the like.

### Summary of Invention

### Technical Problem

However, while being excellent in durability over many years of use, the wall panel mounting structure described in Patent Document 2 has a problem with being unable to adapt the deformation of the wall when the wall is deformed due to an earthquake, a strong wind, or the like, resulting in the distortion of the wall panel mounted.

Therefore, the present invention is to solve the above conventional problems, and an object of the present invention is to provide a polygonal panel mounting structure that significantly facilitates mounting work for a wall panel, enables a single worker to perform the mounting work, and can adapt to the deformation of a mounting surface of a wall, a roof, a ceiling, or the like even when the mounting surface is slightly deformed due to an earthquake, a strong wind, or the like, thus preventing the distortion of the mounted panel.

### Solution to Problem

To solve this problem the present invention provides a polygonal panel mounting structure as defined in claim 1. Further improvements are subject to the dependent claims.

### Advantageous Effects of Invention

The polygonal panel mounting structure according to the present invention significantly facilitates mounting work for a wall panel that is mounted on a wall, a roof, a ceiling, or the like of a building, and enables a single worker to perform the mounting work.

Further, in the polygonal panel mounting structure according to the present invention, the polygonal panel that is mounted on a wall, a roof, a ceiling, or the like can adapt to the deformation of the wall, the roof, the ceiling, or the like even when the wall, the roof, the ceiling, or the like is slightly deformed due to an earthquake, a strong wind, or the like, thus preventing the distortion of the panel.

### Brief Description of Drawings

- [Figure 1]: Figure 1 is an external perspective view showing an embodiment of a polygonal panel mounting structure according to the present invention (in the case of a quadrilateral panel).
- [Figure 2]: Figure 2 is an external perspective view showing an arrangement state of a furring strip base frame, a fitting receiver, one-side-end base frame, and the other-side-end base frame attached to a wall surface in the polygonal panel mounting structure according to the present invention shown in Figure 1.

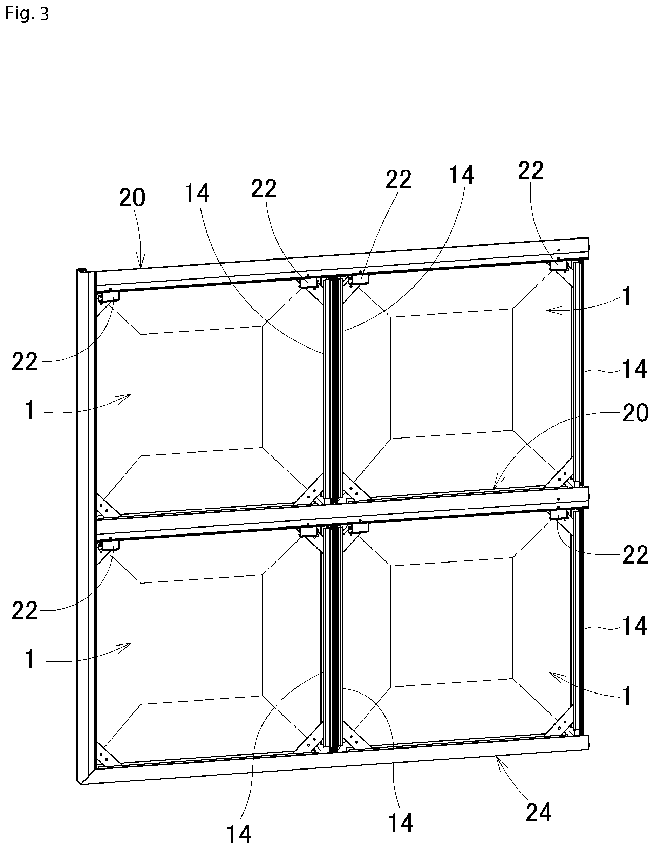

- [Figure 3]: Figure 3 is a perspective view of a state where, in the polygonal panel mounting structure according to the present invention shown in Figure 1, a polygonal panel has been removed from the wall surface together with the furring strip base frame, the fitting receiver, the one-side-end base frame, and the other-side-end base frame attached to the wall surface shown in Figure 2, as viewed from the back side.
- [Figure 4]: Figure 4 is a perspective view of one of quadrilateral panels used in the polygonal panel mounting structure according to the present invention, as viewed from the back side.
- [Figure 5]: Figure 5 is a cross-sectional view of the polygonal panel mounting structure according to the present invention, taken along line A-A in Figure 1.
- [Figure 6]: Figure 6 is an enlarged view of a portion α surrounded by a circle in Figure 5.
- [Figure 7]: Figure 7 is an enlarged view of a portion β surrounded by a circle in Figure 5.
- [Figure 8]: Figure 8 is a cross-sectional view of the polygonal panel mounting structure according to the present invention, taken along line B-B in Figure 1.
- [Figure 9]: Figure 9 is an enlarged view of a portion α surrounded by a circle in Figure 8.
- [Figure 10]: Figure 10 is an enlarged view of a portion β surrounded by a circle in Figure 8.
- [Figure 11]: Figure 11 is a cross-sectional view of the polygonal panel mounting structure according to the present invention, taken along line C-C in Figure 1.
- [Figure 12]: Figure 12 is an enlarged view of a portion α surrounded by a circle in Figure 11.
- [Figure 13]: Figure 13 is an enlarged view of a portion β surrounded by a circle in Figure 11.
- [Figure 14]: Figure 14 is a cross-sectional view of the polygonal panel mounting structure according to the present invention, taken along line D-D in Figure 1.
- [Figure 15]: Figure 15 is an enlarged view of a portion α surrounded by a circle in Figure 14.
- [Figure 16]: Figure 16 is an enlarged view of a portion β surrounded by a circle in Figure 14.
- [Figure 17]: Figure 17 is an external perspective view showing another embodiment of the polygonal panel mounting structure according to the present invention (in the case of a triangular panel).
- [Figure 18]: Figure 18 is an external perspective view showing an arrangement state of a furring strip base frame, a fitting receiver, and a one-side-end base frame attached to the wall surface in the polygonal panel mounting structure according to the present invention shown in Figure 17.

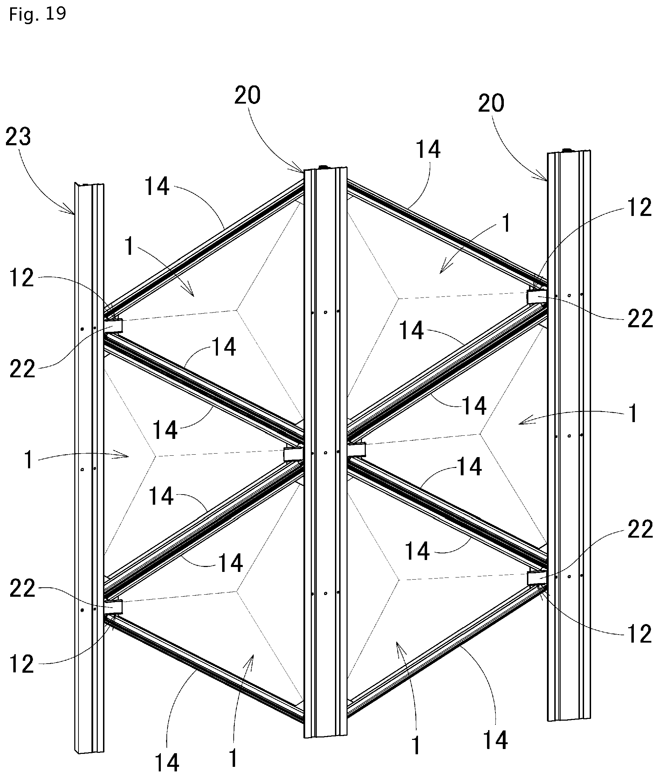

- [Figure 19]: Figure 19 is a perspective view of a state where, in the polygonal panel mounting structure according to the present invention shown in Figure 17, a polygonal panel has been removed from the wall surface together with the furring strip base frame, the fitting receiver, and the one-side-end base frame attached to the wall surface shown in Figure 18, as viewed from the back side.
- [Figure 20]: Figure 20 is a perspective view of one of triangular panels used in the polygonal panel mounting structure according to the present invention, as viewed from the back side.
- [Figure 21]: Figure 21 is a cross-sectional view of the polygonal panel mounting structure according to the present invention, taken along line E-E in Figure 17.
- [Figure 22]: Figure 22 is an enlarged view of a portion α surrounded by a circle in Figure 21.
- [Figure 23]: Figure 23 is an enlarged view of a portion β surrounded by a circle in Figure 21.
- [Figure 24]: Figure 24 is a cross-sectional view of the polygonal panel mounting structure according to the present invention, taken along line F-F in Figure 17.
- [Figure 25]: Figure 25 is an enlarged view of a portion α surrounded by a circle in Figure 24.
- [Figure 26]: Figure 26 is an enlarged view of a portion β surrounded by a circle in Figure 24.
- [Figure 27]: Figure 27 is an enlarged cross-sectional view of the polygonal panel mounting structure according to the present invention, taken along line G-G in Figure 17.
- [Figure 28]: Figure 28 is a view of a fitting frame of the quadrilateral panel and the triangular panel.
- [Figure 29]: Figure 29 is a perspective view of a fitting cap of the quadrilateral panel.
- [Figure 30]: Figure 30 is a perspective view of a fitting cap of the triangular panel.
- [Figure 31]: Figure 31 is a perspective view of an abutting frame of the quadrilateral panel and the triangular panel.
- [Figure 32]: Figure 32 is a perspective view of a mating frame of the quadrilateral panel and the triangular panel.
- [Figure 33]: Figure 33 is a perspective view of a gasket attached between the polygonal panels mounted on the wall surface or to a side end of the polygonal panel.
- [Figure 34]: Figure 34 is a perspective view of a gasket attached between the polygonal panels mounted on the wall surface.
- [Figure 35]: Figure 35 is a perspective view of a gasket attached to a corner of the triangular panel attached to the wall surface.
- [Figure 36]: Figure 36 is a perspective view of the furring strip base frame of the quadrilateral panel fixed to the wall surface.
- [Figure 37]: Figure 37 is a perspective view of the furring strip base frame of the triangular panel fixed to the wall surface.
- [Figure 38]: Figure 38 is a perspective view of a fitting receiver attached to the furring strip base frame of the quadrilateral panel so as to be swingable.
- [Figure 39]: Figure 39 is a perspective view of a fitting receiver attached to the furring strip base frame of the triangular panel so as to be swingable.
- [Figure 40]: Figure 40 is a perspective view of the one-side-end base frame of the quadrilateral panel fixed to the wall surface.
- [Figure 41]: Figure 41 is a perspective view of the one-side-end base frame of the triangular panel fixed to the wall surface.
- [Figure 42]: Figure 42 is a perspective view of the other-side-end base frame of the quadrilateral panel fixed to the wall surface.
- [Figure 43]: Figure 43 is an explanatory view showing a procedure for mounting one of the quadrilateral panels to a wall surface in the polygonal panel mounting structure of the present invention.
- [Figure 44]: Figure 44 is an enlarged view of a portion α surrounded by a circle in Figure 43.
- [Figure 45]: Figure 45 is an enlarged view of a portion β surrounded by a circle in Figure 43.
- [Figure 46]: Figure 46 is an explanatory view showing a state after the one of the quadrilateral panels has been mounted on the wall surface in the polygonal panel mounting structure according to the present invention.
- [Figure 47]: Figure 47 is an explanatory view showing a procedure for mounting one of the triangular panels on a wall surface in the polygonal panel mounting structure of the present invention.
- [Figure 48]: Figure 48 is an enlarged view of a portion α surrounded by a circle in Figure 47.
- [Figure 49]: Figure 49 is an enlarged view of a portion β surrounded by a circle in Figure 47.
- [Figure 50]: Figure 50 is an explanatory view showing a state after the one of the triangular panels has been mounted on the wall surface in the polygonal panel mounting structure according to the present invention.

### Description of Embodiment

Hereinafter, an embodiment of the polygonal panel mounting structure according to the present invention will be described in detail with reference to the figures.

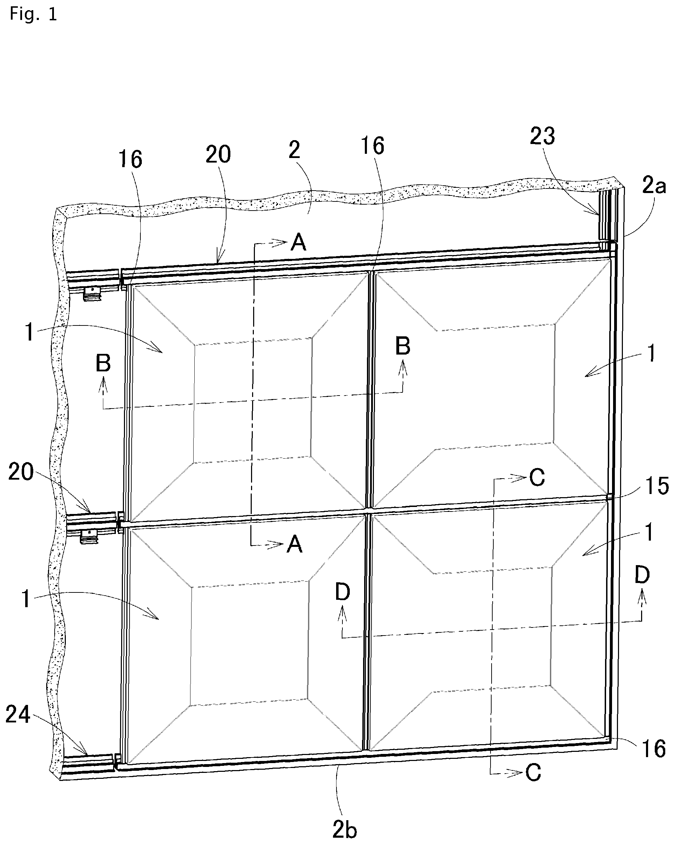

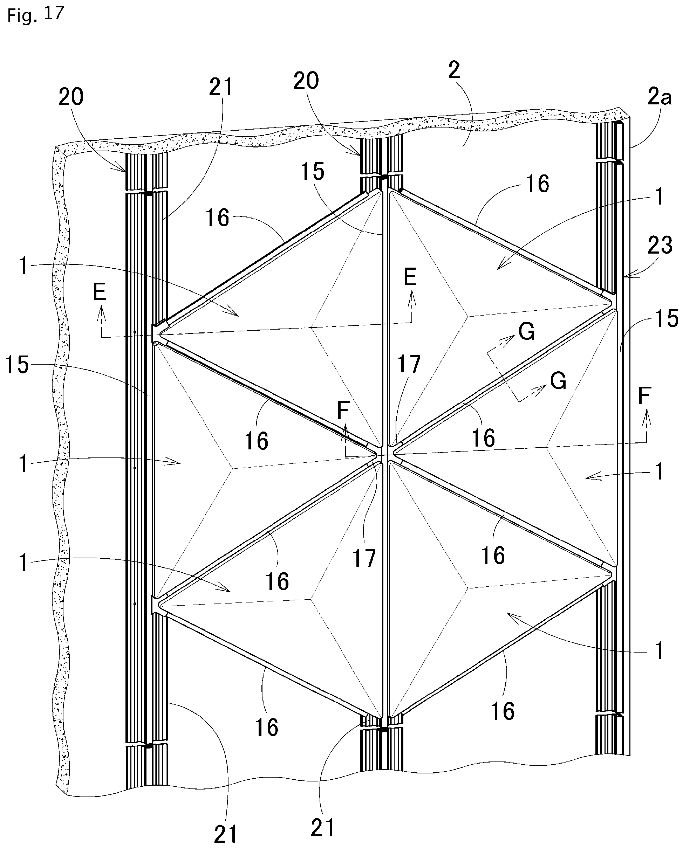

In the polygonal panel mounting structure according to the present invention, as shown in Figure 1 or Figure 17, many polygonal panels 1 are mounted one by one on a mounting surface 2, such as a wall, a roof, or a ceiling (a wall surface is shown in the figure). Then, the mounting surface 2 is covered with many polygonal panels 1.

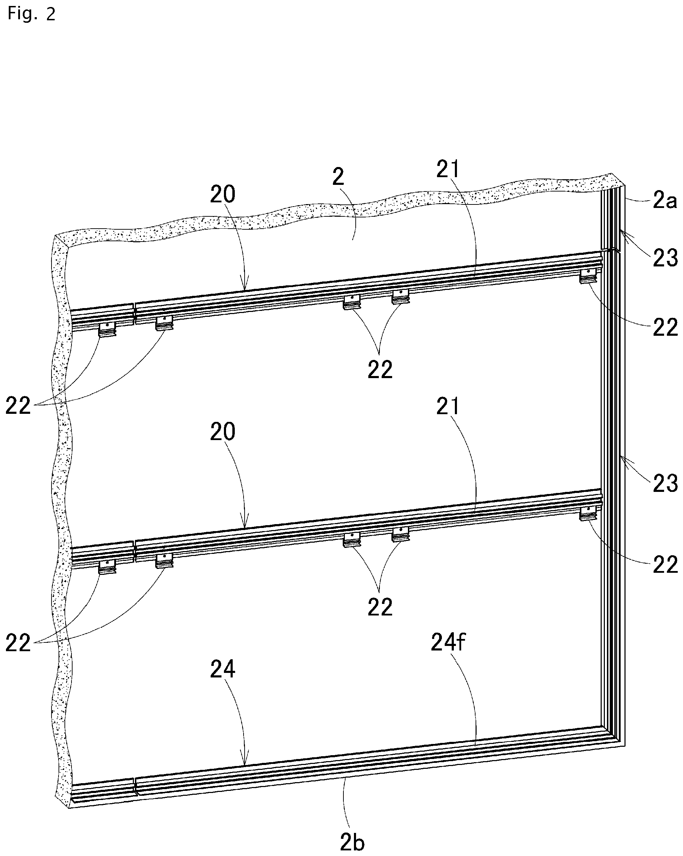

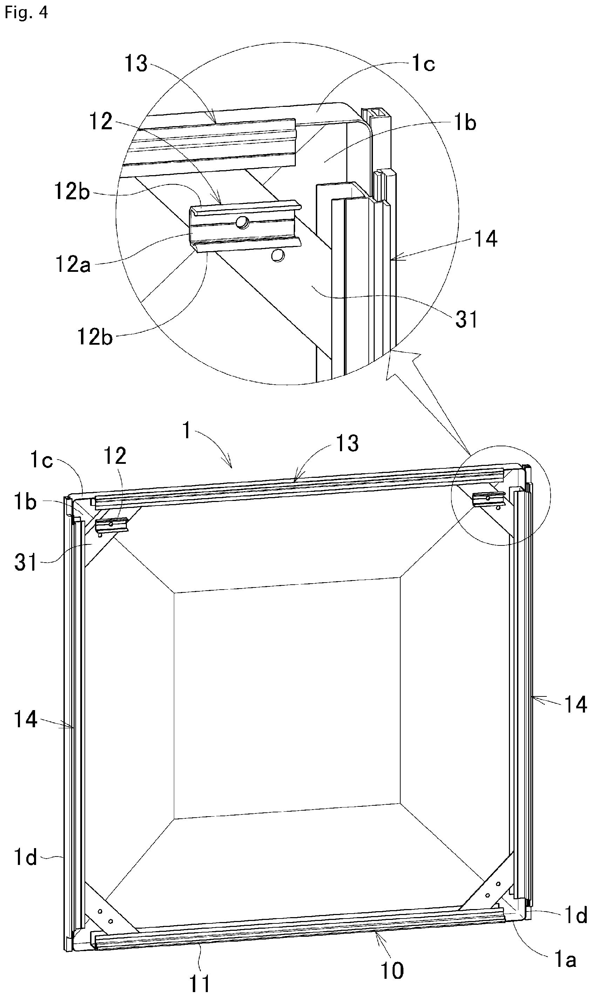

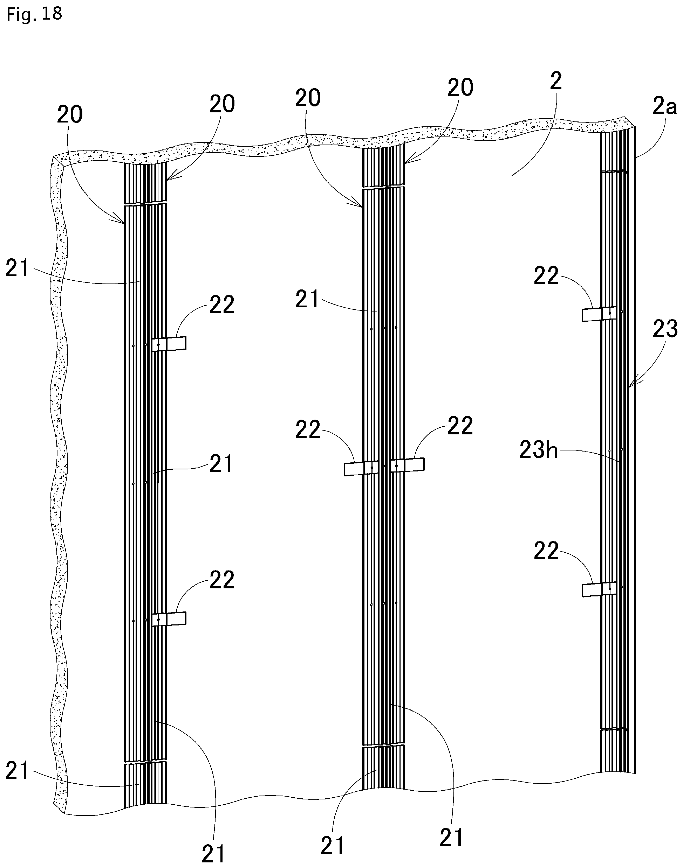

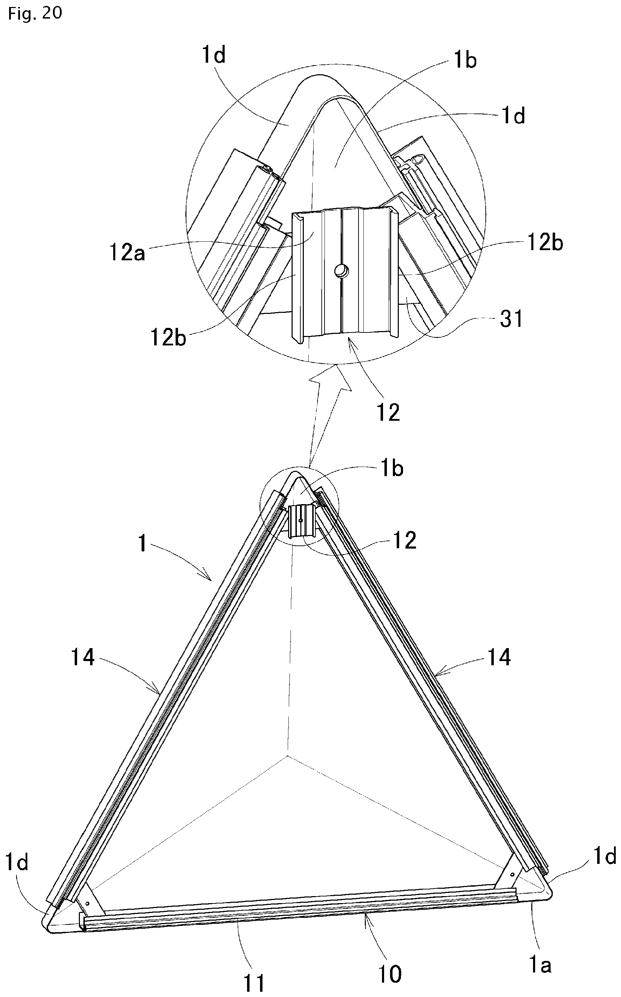

That is, in each of many polygonal panels 1, a fitting portion 11 of a fitting frame 10 provided on a one side portion 1a of the polygonal panel 1, as shown in Figures 4 and 20, is loosely fitted into a fitting groove 21 provided in one of furring strip base frames 20 that are fixed parallel to each other on the mounting surface 2 of the polygonal panel 1, as shown in Figures 2 and 18. Further, a fitting cap 12 provided at a corner 1b, facing the one side portion 1a of the polygonal panel 1, is fitted to a fitting receiver 22 that is provided so as to be swingable on the other of the furring strip base frames 20.

The polygonal panel 1 preferably has a planar shape that is a regular quadrilateral or a regular triangle. The polygonal panel 1 has a three-dimensional shape with a top surface and side surfaces, and the top surface is shown as having a shape of either a raised regular quadrangular pyramid or a raised regular triangular pyramid. In the present embodiment, a case where the planar shape of the polygonal panel 1 is a regular quadrilateral or a regular triangle has been described. However, the planar shape may be a quadrilateral other than the regular quadrilateral or a triangle other than the regular triangle, for example, a rhombus, a parallelogram, an isosceles trapezoid, a right triangle, an isosceles triangle, or the like. Further, the planar shape of the polygonal panel 1 may be a polygon other than a quadrilateral or a triangle, as required.

When the planar shape of the polygonal panel 1 is the regular quadrilateral, as shown in Figure 4, the fitting frame 10 is provided on the one side portion 1a, the fitting caps 12 are provided at both corners 1b, 1b facing the one side portion 1a, an abutting frame 13 is provided on a one side portion 1c facing the one side portion 1a, and a mating frame 14 is provided on each of other side portions 1d, 1d.

As shown in Figures 1 and 2, a plurality of furring strip base frames 20 are fixed horizontally parallel to each other on the mounting surface 2. The fitting portion 11 of the fitting frame 10 of the polygonal panel 1 is loosely fitted in the fitting groove 21 of the furring strip base frame 20 at an intermediate portion that is not adjacent to a one-side-end portion 2a of the mounting surface 2 or an other-side-end portion 2b adjacent to the one-side-end portion 2a. Further, the fitting cap 12 of the polygonal panel 1 is fitted to the fitting receiver 22 that is provided so as to be swingable on the other of the furring strip base frames 20.

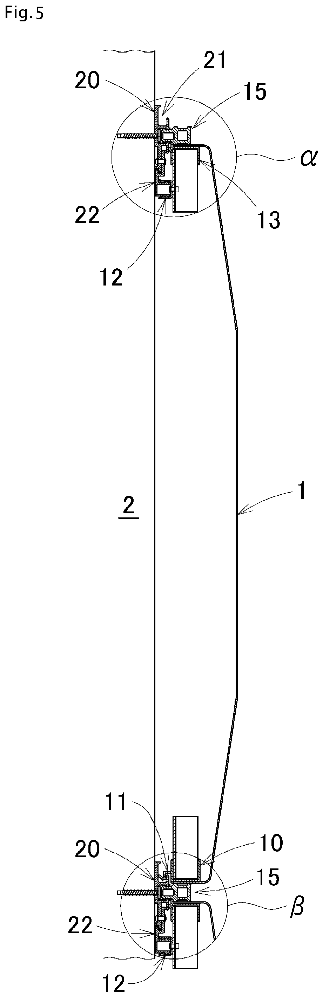

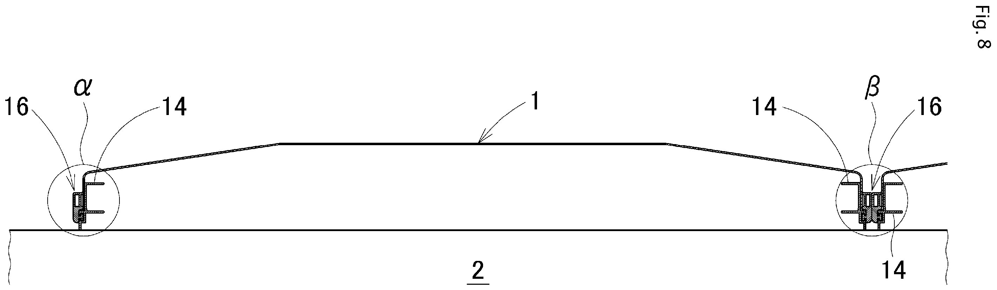

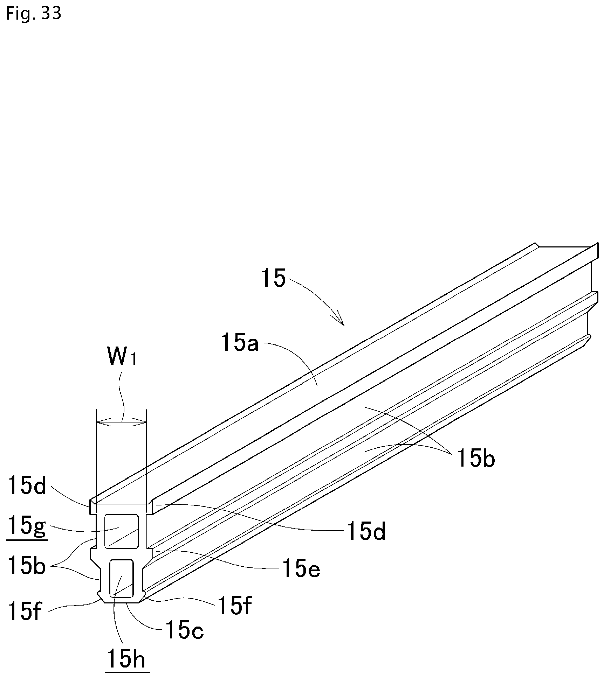

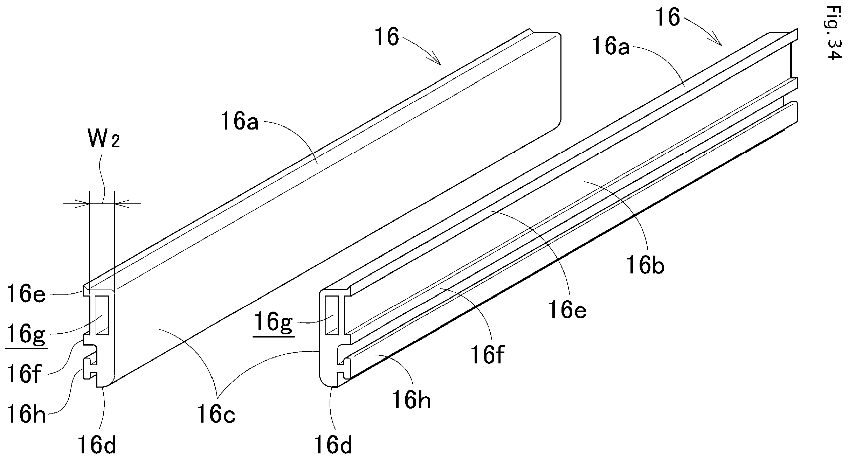

Moreover, as shown in Figures 1 and 5 to 16, a gasket, stretchable in the width direction, is attached between each of many polygonal panels 1 mounted on the mounting surface 2. That is, in Figure 1, a gasket 15 (cf. Figure 33), which is one member, is attached to seal the gap between the upper and lower polygonal panels 1 or seal the gap at the side end of the polygonal panel 1 located at the side-end portion 2a of the mounting surface 2, and a gasket 16 (cf. Figure 34), made up of two members for sealing the gap between the left and right polygonal panels 1, is attached.

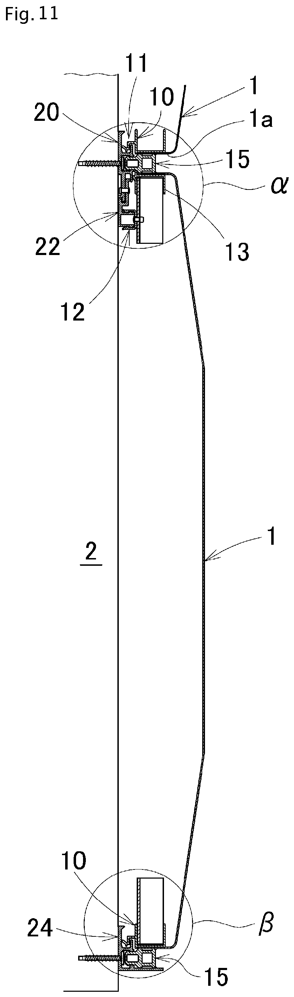

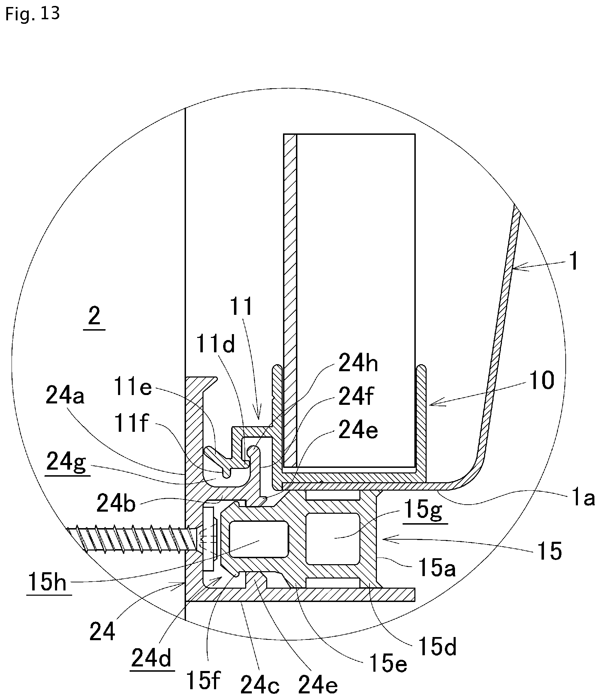

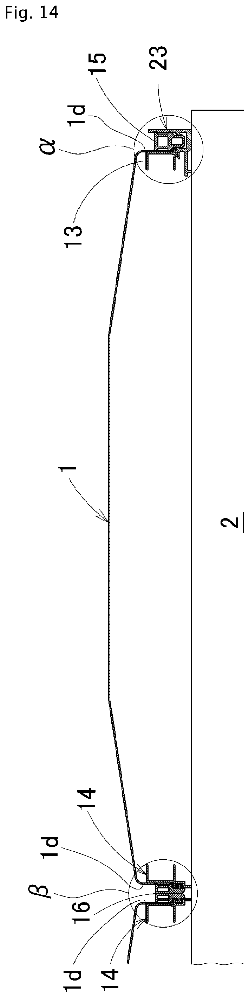

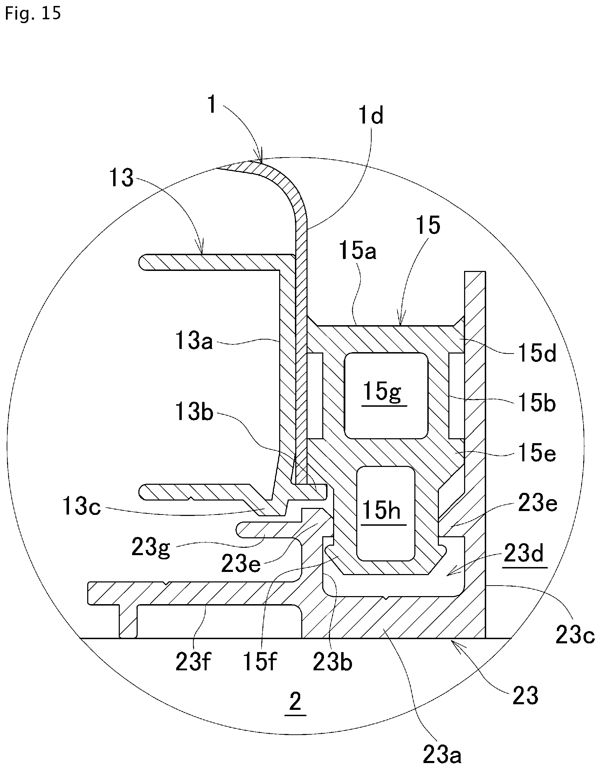

Note that a one-side-end base frame 23 is fixed vertically to the one-side-end portion 2a of the mounting surface 2, and an other-side-end base frame 24 is fixed to the other-side-end portion 2b of the mounting surface 2 in place of the furring strip base frame 20. In a portion of the polygonal panel 1 that is attached to the side end of the mounting surface 2, as shown in Figures 14 and 15, one of the mating frames 14 of the polygonal panel 1 serves as the abutting frame 13, and the abutting frame 13 is abutted against the one-side-end base frame 23. Further, in a portion of the polygonal panel 1 that is attached to the other side end of the mounting surface 2, as shown in Figures 11 and 13, the fitting portion 11 of the fitting frame 10 is loosely fitted in a fitting groove 24g of the other-side-end base frame 24.

When the planar shape of the polygonal panel 1 is the regular triangle, as shown in Figure 20, a fitting frame 10 is provided on a one side portion 1a, a fitting cap 12 is provided at a corner 1b facing the one side portion 1a, and a mating frame 14 is provided on each of other side portions 1d, 1d.

As shown in Figures 17 and 18, a plurality of furring strip base frames 20 are fixed vertically parallel to each other on the mounting surface 2. In the polygonal panel 1, a fitting portion 11 of the fitting frame 10 is loosely fitted in the fitting groove 21 of a furring strip base frame 20 at an intermediate portion not adjacent to the one-side-end portion 2a or the other-side-end portion 2b of the mounting surface 2. Further, the fitting cap 12 of the polygonal panel 1 is fitted to the fitting receiver 22 that is provided so as to be swingable on the other of the furring strip base frames 20.

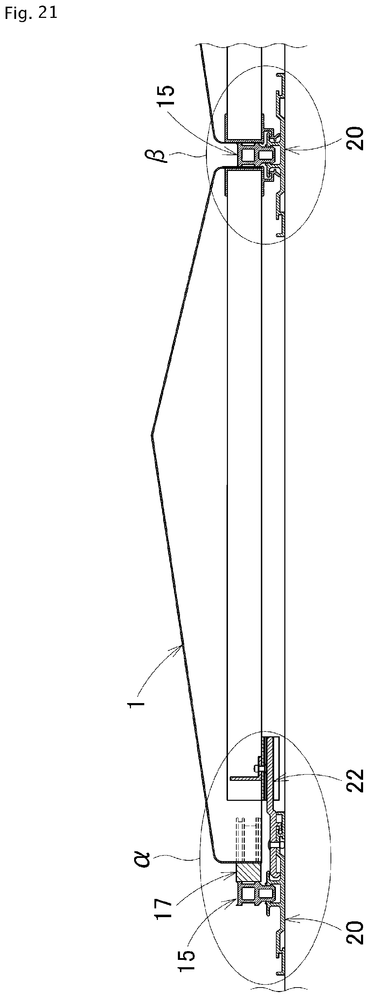

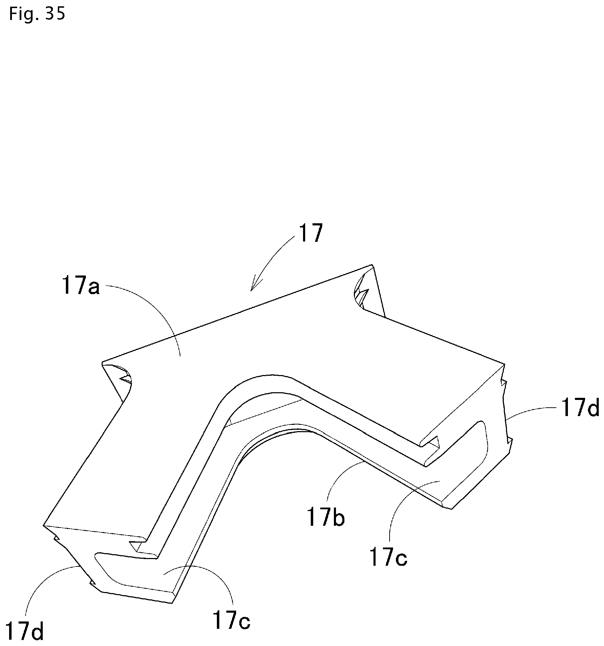

Moreover, as shown in Figures 17 and 21 to 27, a gasket, stretchable in the width direction, is fitted between each of many polygonal panels 1 mounted on the mounting surface 2. That is, in Figure 17, the gasket 15 (cf. Figure 33), which is one member for sealing the gap between the left and right polygonal panels 1, is attached, and the gasket 16 (cf. Figure 34), made up of two members for sealing the gap between the upper and lower polygonal panels 1, is attached. Further, a gasket 17 (cf. Figure 35), which is one member for sealing the joint at the corner of the polygonal panel 1, is attached.

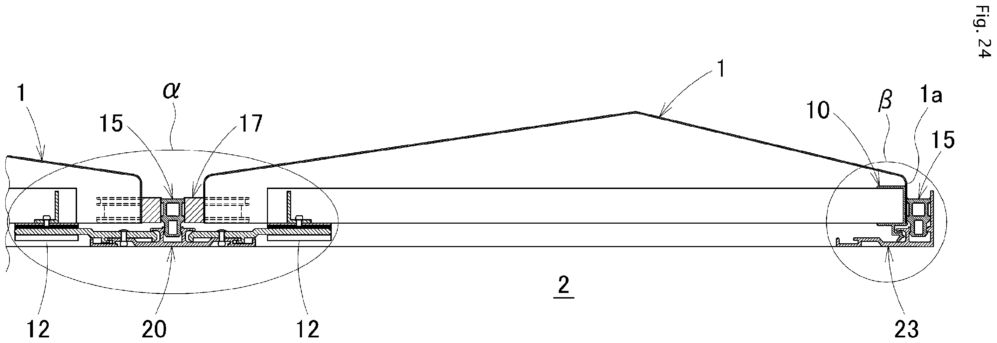

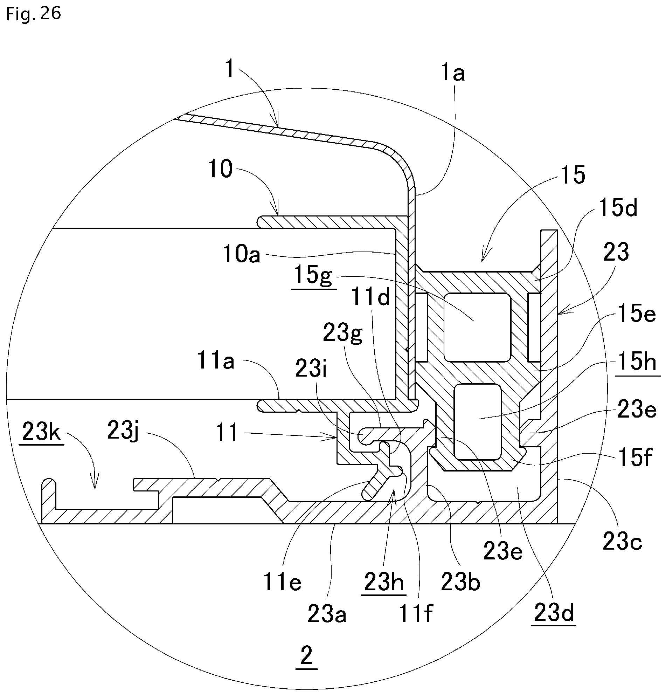

Note that a one-side-end base frame 23 is fixed vertically to the side-end portion 2a of the mounting surface 2. In a portion of the polygonal panel 1 to be attached to the side end of the mounting surface 2, as shown in Figures 24 and 26, the fitting portion 11 of the fitting frame 10 provided on the one side portion 1a is loosely fitted in a fitting groove 23h of the one-side-end base frame 23.

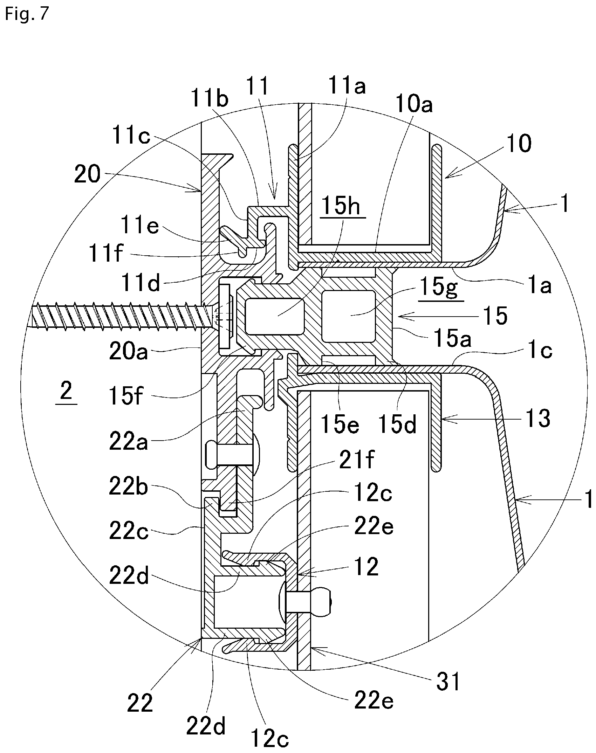

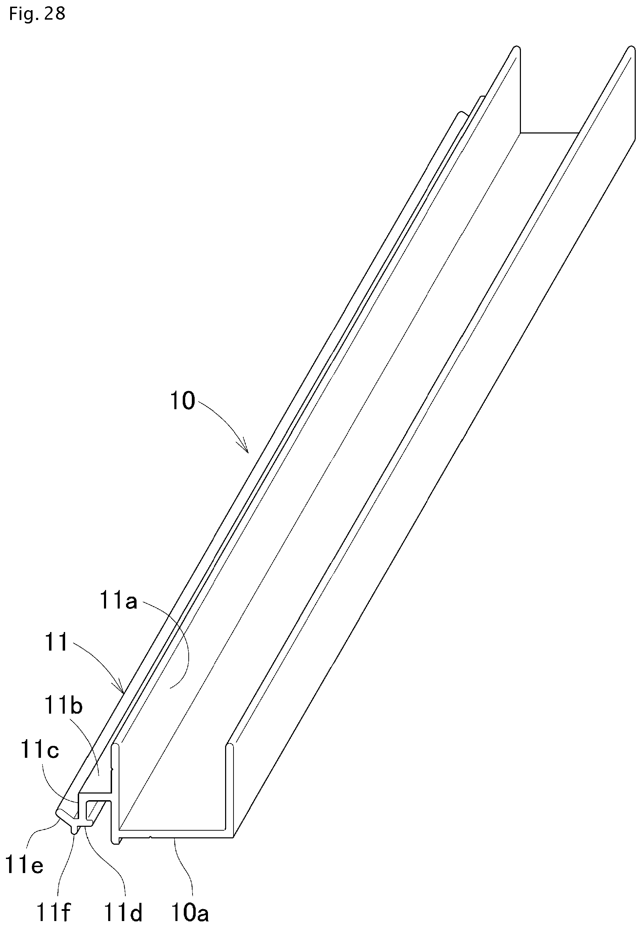

As shown in Figures 7, 12, 13, 23, 26, and 28, the fitting frame 10 has an attachment surface portion 10a to be attached to the inner side of the one side portion 1a of the polygonal panel 1. The fitting portion 11 of the fitting frame 10 includes a first flat portion 11a projecting parallel to the mounting surface 2, such as a wall surface, from the attachment surface portion 10a, a second flat portion 11b projecting at a right angle to the mounting surface 2 from the first flat portion 11a, a third flat portion 11c projecting at a right angle from the side end of the second flat portion 11b, and the like. The fitting portion 11 of the fitting frame 10 inwardly includes, at the outer end of the third flat portion 11c, a first rib 11d projecting parallel to the second flat portion 11b. The fitting portion 11 outwardly includes, at the outer end of the third flat portion 11c, an inclined rib 11e angled at 30 to 60 degrees with respect to the third flat portion 11c, and further includes, at the base end of the inclined rib 11e, a second rib 11f projecting at a right angle to the second flat portion 11b.

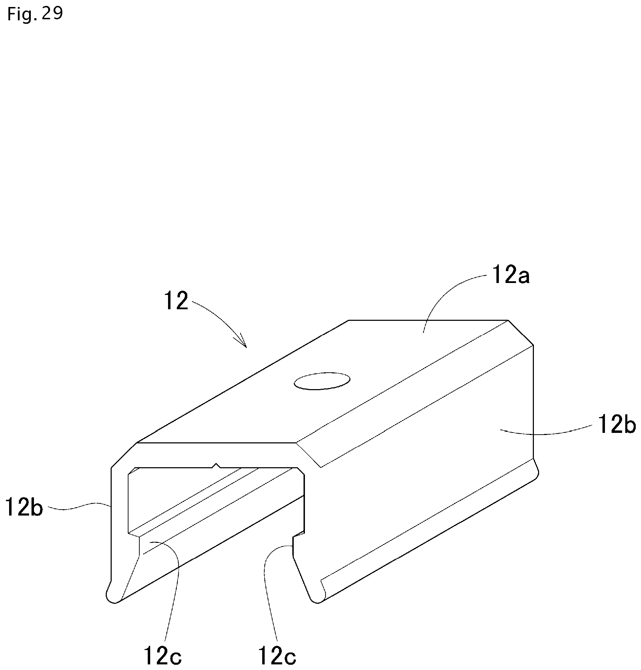

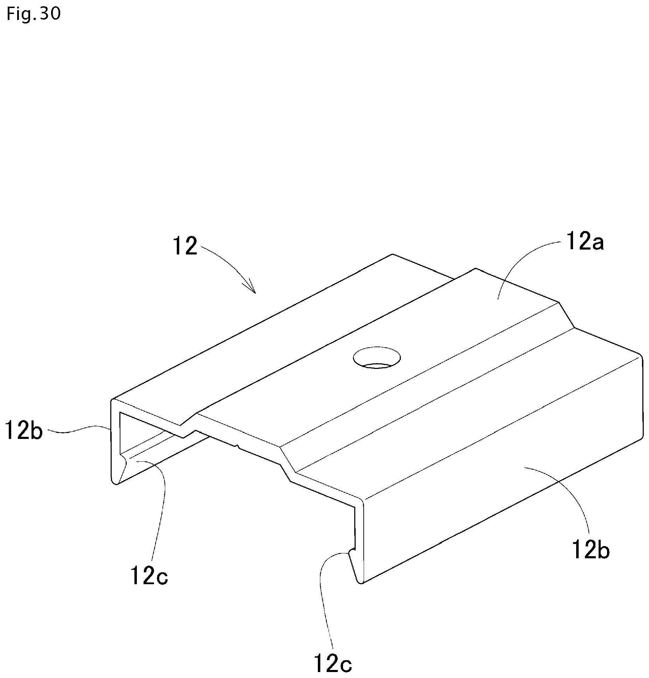

The fitting cap 12 is shown in Figures 4, 6, 7, 12, and 29 when the planar shape of the polygonal panel 1 is the regular quadrilateral, and is shown in Figures 20, 22, 25, and 30 when the planar shape of the polygonal panel 1 is the regular triangle. Specifically, in the fitting cap 12, an attachment surface portion 12a is attached to a reinforcing member 31, provided at the corner 1b of the polygonal panel 1, by rivets or the like so as to be swingable. Opposite surface portions 12b, 12b project parallel to each other from both side ends of the attachment surface portion 12a in an elastically deformable manner, and retaining ribs 12c, 12c are formed on the inner sides of the outer ends of the opposite surface portions 12b, 12b, respectively.

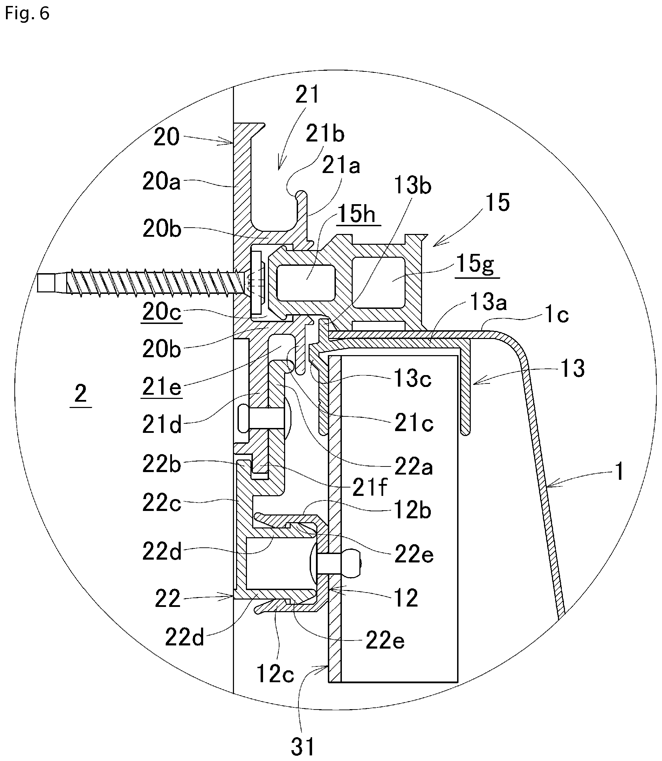

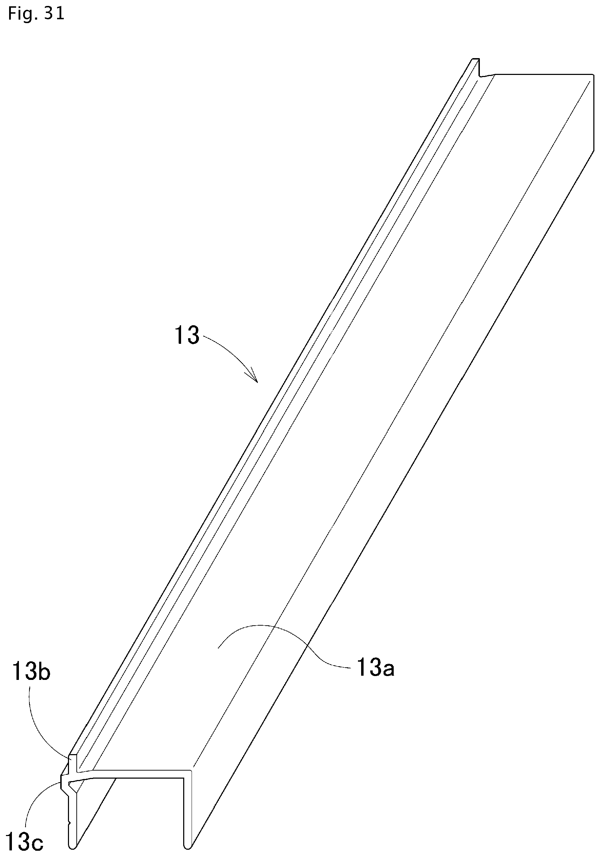

The abutting frame 13 is used when the planar shape of the polygonal panel 1 is the regular quadrilateral. In the abutting frame 13, as shown in Figures 6, 7, 12, and 31, on an attachment surface portion 13a to be attached to the inner side of the one side portion 1c of the polygonal panel 1, a rib 13b projecting parallel to the mounting surface 2, such as the wall surface, from the side end of the attachment surface portion 13a, and rib 13c projecting at a right angle to the mounting surface 2 are formed. Further, as shown in Figure 15, on the attachment surface portion 13a to be attached to the inner side of the other side portion 1d of the polygonal panel 1, the abutting frame 13 has the rib 13b projecting parallel to the mounting surface 2, such as the wall surface, from the side end of the attachment surface portion 13a, and the rib 13c projecting at a right angle to the mounting surface 2.

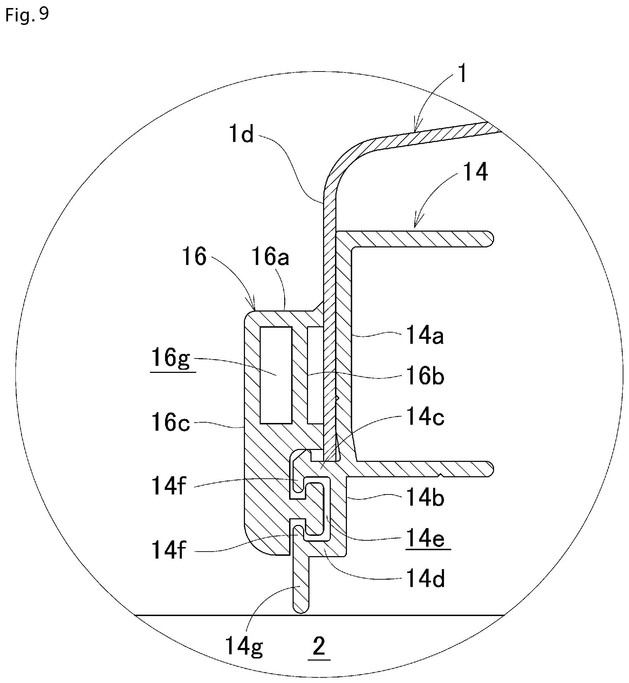

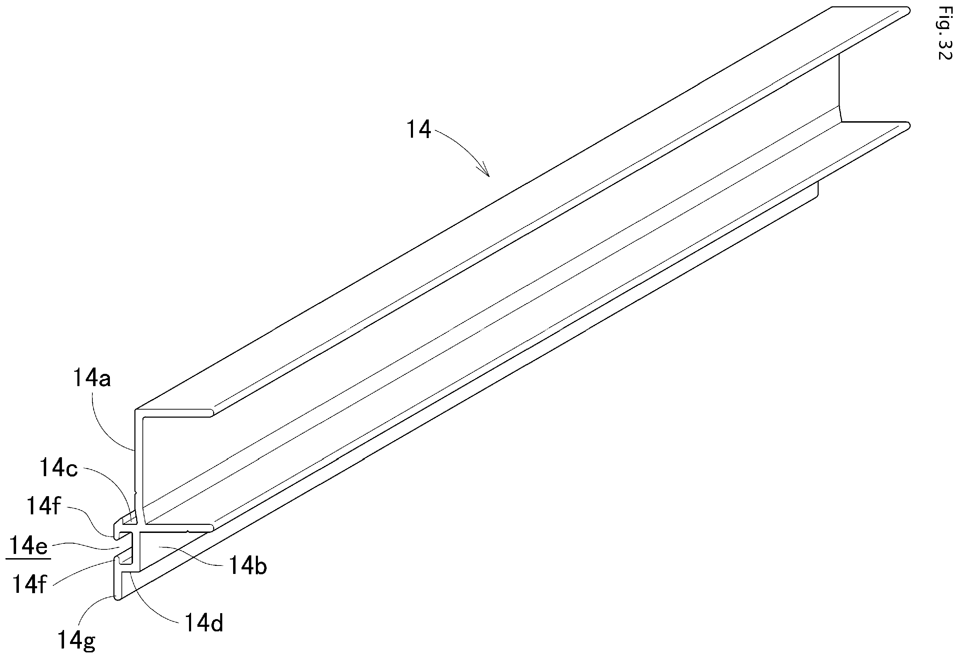

In the mating frame 14, as shown in Figures 9, 10, 16, 27, and 32, on an attachment surface portion 14a to be attached to the inner sides of the other side portions 1d, 1d of the polygonal panel 1, a flat portion 14b projecting parallel to the attachment surface portion 14a and a groove portion 14e surrounded by flat portions 14c, 14d projecting at right angles from both side ends of the flat portions 14b are formed. Retaining ribs 14f, 14f of the gasket 16 are formed on the inner sides of side ends of the flat portions 14c, 14d, respectively, and an installation rib 14g for the mounting surface 2 is formed on the outer side of the side end of the flat portion 14d.

The gasket 15 is made of an elastically deformable synthetic resin or the like, and as shown in Figures 6, 7, 12, 13, 15, 22, 23, 25, 26, and 33, the gasket 15 is a long member with a cross section in an elongated, substantially quadrilateral shape, formed of a top surface portion 15a, two side surface portions 15b, 15b, and a bottom surface portion 15c. In the gasket 15, retaining ribs 15d, 15e, 15f are formed in the upper, middle, and lower sections of both side surface portions 15b, and on the inner side, two deformation passages 15g, 15h having a substantially quadrilateral cross-sectional shape are formed. When a pressing force is applied in the width direction of the gasket 15, the deformation passages 15g, 15h are deformed, and a width W₁ of the gasket 15 is reduced to about a half.

The gasket 16 is made of an elastically deformable synthetic resin or the like. As shown in Figures 9, 10, 16, 27, and 34, the gasket 16 is formed of divided bodies that are mirror images of each other (optically non-symmetrical), each being a long member with a cross section in an elongated, substantially quadrilateral shape, formed of a top surface portion 16a, a side surface portion 16b, a contact surface portion 16c, and a bottom surface portion 16d. In the gasket 16, retaining ribs 16e, 16f are formed in the upper and middle sections of each side surface portion 16b, and a deformation passage 16g having a substantially quadrilateral cross section is formed in the upper section. When a pressing force is applied in the width direction of the gasket 16, the deformation passage 16g is deformed and a width W₂ of the gasket 16 is reduced to about a half. Further, a retaining rib 16h projecting from the side surface portion 16b is formed at the lower section of the side surface portion 16b of the gasket 16. As shown in Figures 9, 10, 16, and 27, the retaining rib 16h is inserted or fitted into the groove portion 14e of the mating frame 14, whereby the gasket 16 is attached to the mating frame 14.

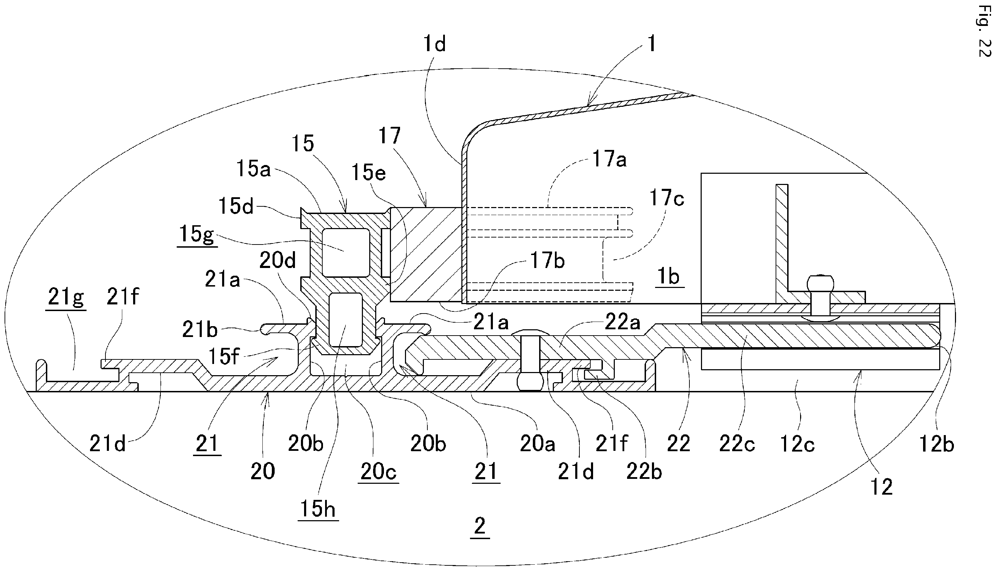

The gasket 17 is used when the planar shape of the polygonal panel 1 is the regular triangle, and is a member made of an elastically deformable synthetic resin or the like. In the gasket 17, as shown in Figures 22, 25 and 35, a fitting groove 17c to be fitted along the corner 1b of the polygonal panel 1 is provided on the inner side between a top surface portion 17a and a bottom surface portion 17b having a planar shape with a folded-linear feature. A fitting groove 17d to be fitted along the corner 1b of the adjacent triangular panel is provided on the outer side between the top surface portion 17a and the bottom surface portion 17b.

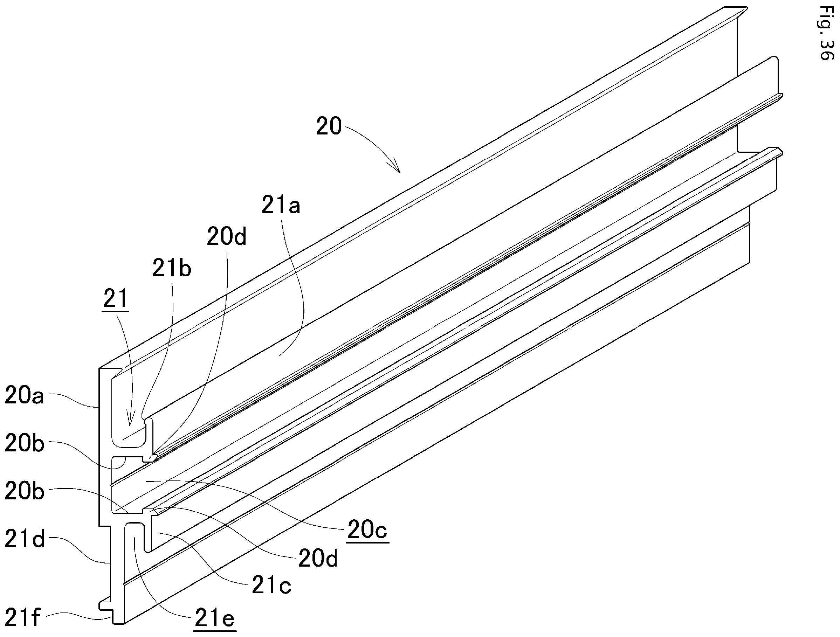

As shown in Figures 6, 7, 12, and 36, when the planar shape of the polygonal panel 1 is the regular quadrilateral, the furring strip base frame 20 has a fixed surface portion 20a to be fixed to a mounting surface 2, such as the wall surface. A gasket fitting groove 20c is formed between opposite surface portions 20b, 20b projecting from the fixed surface portion 20a. In the fitting groove 21 of the furring strip base frame 20, retaining ribs 20d, 20d are formed on the inner sides of side ends of the opposite surface portions 20b, 20b. The fitting groove 21 of the furring strip base frame 20 is surrounded by the fixed surface portion 20a, a flat portion 21a parallel to the fixed surface portion 20a, and one of the opposite surface portions 20b. When the mounting surface 2 is deformed due to an earthquake, a strong wind, or the like, a first rib 11d of the fitting portion 11 of the polygonal panel 1 slides on the flat portion 21a including a retaining rib 21b, engaged with the first rib 11d, at the outer end, and an inclined rib 11e of the fitting portion 11 slides on the fixed surface portion 20a, whereby a second rib 11f of the fitting portion 11 is attachable to and detachable from the opposite surface portion 20b. In the furring strip base frame 20, two flat portions 21c, 21d parallel to the fixed surface portion 20a project from the other of the opposite surface portions 20b. An insertion portion 22a of the fitting receiver 22 to be described later is inserted into the fitting groove 21e surrounded by the two flat portions 21c, 21d and the opposite surface portion 20b, and the insertion portion 22a is pivotally supported by a rivet or the like on the flat portion 21d, so that the fitting receiver 22 is attached so as to be swingable. Further, an engagement projection 21f is provided at the outer end of the flat portion 21d of the furring strip base frame 20, and the engagement projection 21f is engaged in a slidable manner with an engagement projection 22b of the fitting receiver 22 to be described later. In this way, the fitting receiver 22 can be swung without shaking, and when a separating force acts between the fitting receiver 22 and the furring strip base frame 20, the fitting receiver 22 and the furring strip base frame 20 are prevented from being separated by the separating force.

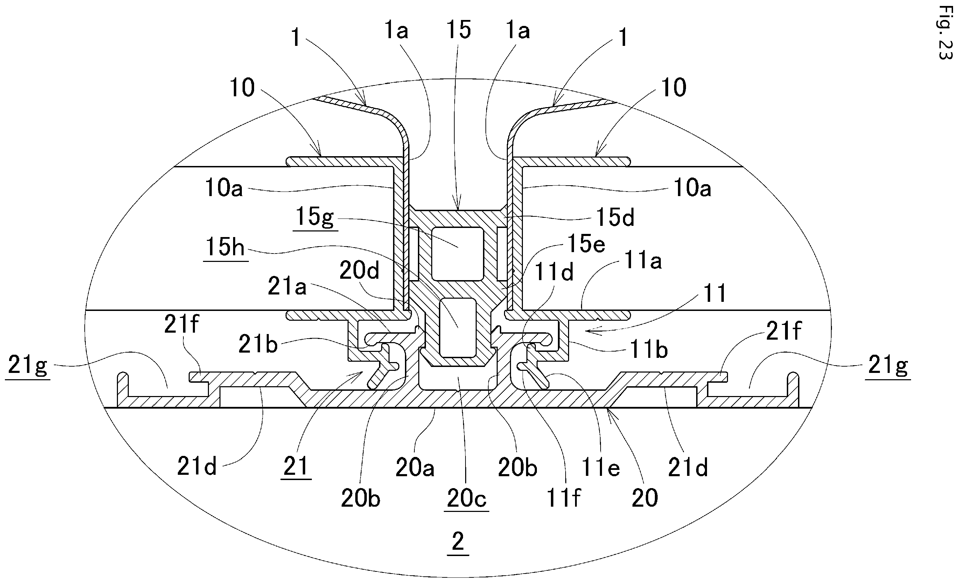

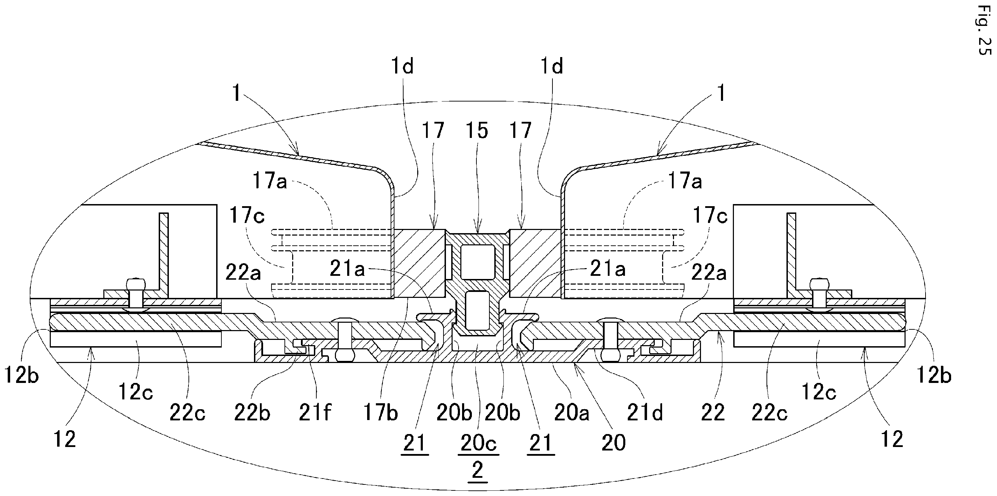

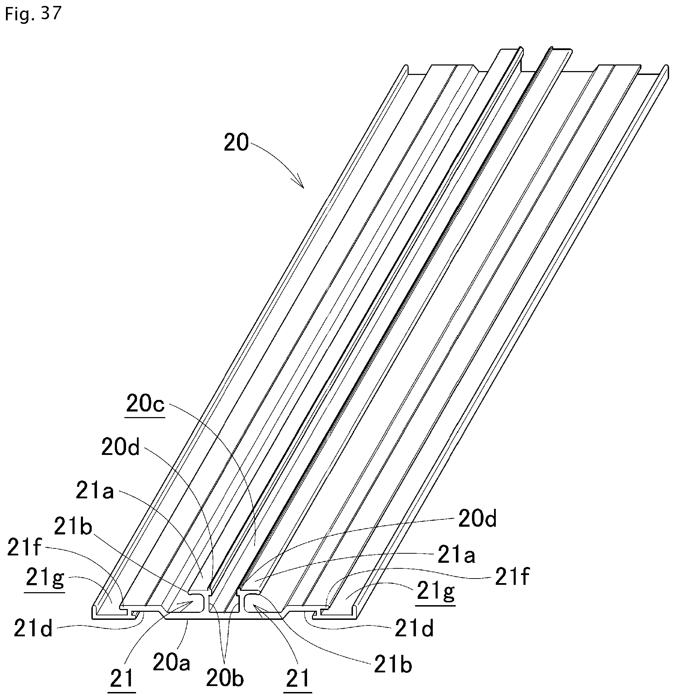

When the planar shape of the polygonal panel 1 is the regular triangle, the furring strip base frame 20 has a fixed surface portion 20a to be fixed to the mounting surface 2, such as the wall surface, as shown in Figures 23 and 37. The gasket fitting groove 20c is formed between the opposite surface portions 20b, 20b projecting from the central portion of the fixed surface portion 20a. In the fitting groove 21 of the furring strip base frame 20, the retaining ribs 20d, 20d are formed on the inner sides of side ends of the opposite surface portions 20b, 20b, and on the outer side, two flat portions 21a, 21a parallel to the fixed surface portion 20a project. The fitting groove 21 of the furring strip base frame 20 is formed to be surrounded by the flat portions 21a, 21a, the opposite surface portions 20b, 20b, and the fixed surface portion 20a. When the mounting surface 2 is deformed due to an earthquake, a strong wind, or the like, a first rib 11d of the fitting portion 11 of the polygonal panel 1 slides on the flat portion 21a including a retaining rib 21b, engaged with the first rib 11d, at the outer end, and an inclined rib 11e of the fitting portion 11 slides on the fixed surface portion 20a, whereby a second rib 11f of the fitting portion 11 is attachable to and detachable from the opposite surface portion 20b. In the furring strip base frame 20, the two flat portions 21d, 21d parallel to the fixed surface portion 20a are extended on both sides of the fixed surface portion 20a, the engagement projection 21f is provided on each of the outer ends of the flat portions 21d, 21d, and a drain groove 21g is formed on each of the outer sides of the flat portions 21d, 21d. The drain groove 21g is designed to efficiently drain rainwater or the like that enters between the polygonal panel 1 and the mounting surface 2 in rainy weather or the like. With respect to the fitting groove 21 of the furring strip base frame 20, as shown in Figures 22 and 25, the insertion portion 22a of the fitting receiver 22 to be described later is inserted into the corner 1b of the polygonal panel 1. The insertion portion 22a is pivotally supported by a rivet or the like on the flat portion 21d, and hence the fitting receiver 22 is attached to the furring strip base frame 20 so as to be swingable. Further, the engagement projection 21f of the furring strip base frame 20 is engaged in a slidable manner with the engagement projection 22b of the fitting receiver 22 to be described later. In this way, the fitting receiver 22 can be swung without shaking, and when a separating force acts between the fitting receiver 22 and the furring strip base frame 20, the fitting receiver 22 and the furring strip base frame 20 are prevented from being separated by the separating force.

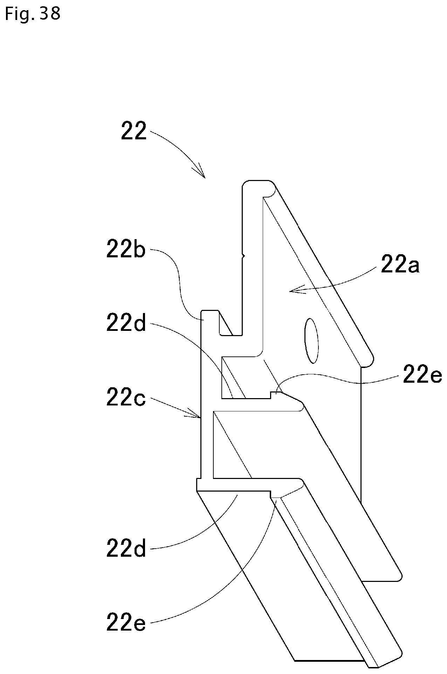

As shown in Figures 6, 7, 12, and 38, when the planar shape of the polygonal panel 1 is the regular quadrilateral, the fitting receiver 22 has the insertion portion 22a to be inserted into the fitting groove 21e of the furring strip base frame 20. The engagement projection 22b to be engaged with the engagement projection 21f of the furring strip base frame 20 is provided at the base end of the insertion portion 22a. Further, the insertion portion 22a is continuously connected to the fitting surface portion 22c that is fitted between the opposite surface portions 12b, 12b of the fitting cap 12. The fitting surface portion 22c has opposing surfaces 22d, 22d projecting parallel to each other so as to be fitted between the opposing surfaces 12b, 12b of the fitting cap 12, and on the outer sides of the outer ends of the opposing surfaces 22d, 22d, retaining ribs 22e, 22e caught on the retaining ribs 12c, 12c of the fitting cap 12 are formed, respectively.

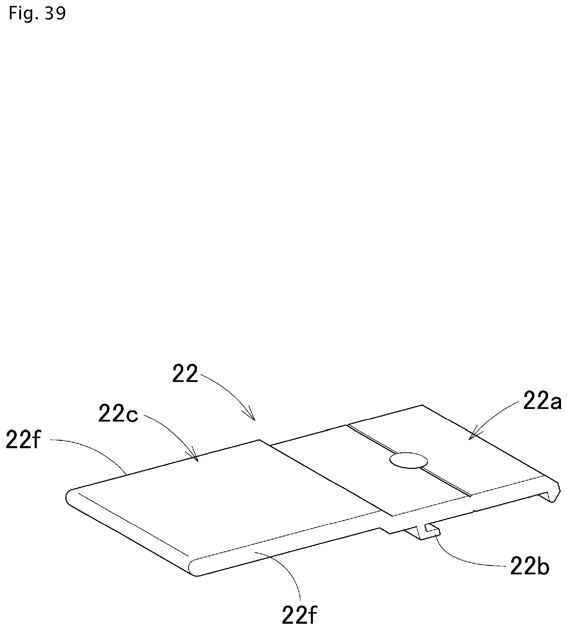

When the planar shape of the polygonal panel 1 is the regular triangle, the fitting receiver 22 has the insertion portion 22a to be inserted into the fitting groove 21 of the furring strip base frame 20, as shown in Figures 22, 25, and 39. The engagement projection 22b to be engaged with the engagement projection 21f of the furring strip base frame 20 is provided at the base end of the insertion portion 22a. Further, the insertion portion 22a is continuously connected to the fitting surface portion 22c that is fitted between the opposite surface portions 12b, 12b of the fitting cap 12. The fitting surface portion 22c is a flat portion designed to be fitted between the opposing surfaces 12b, 12b of the fitting cap 12, and the retaining ribs 12c, 12c of the fitting cap 12 are caught on the opposite sides 22f, 22f of the fitting surface portion 22c.

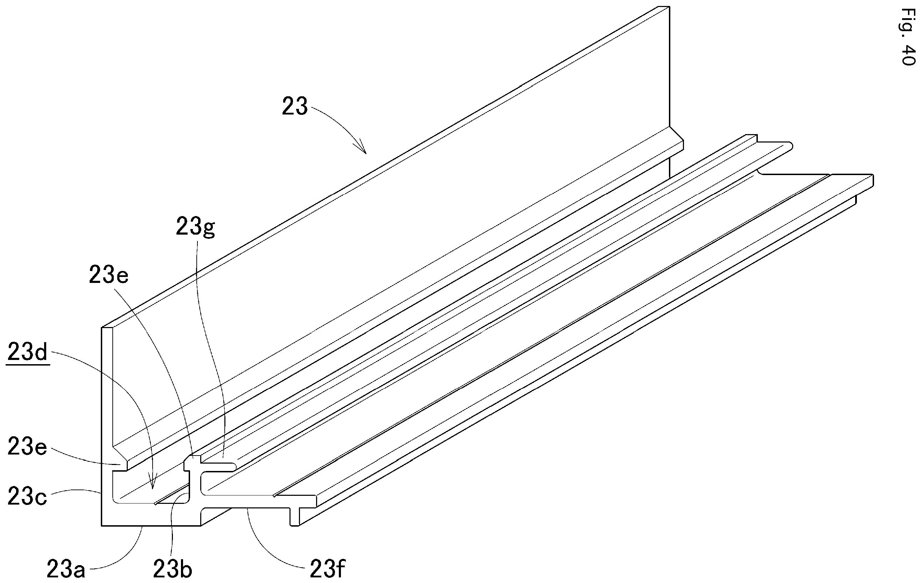

In the one-side-end base frame 23, when the planar shape of the polygonal panel 1 is the regular quadrilateral, as shown in Figures 15 and 40, the space between opposite surface portions 23b, 23c projecting from a fixed surface portion 23a to be fixed to the mounting surface 2, such as the wall surface, is formed as a gasket fitting groove 23d, and retaining ribs 23e, 23e of the gasket 15 are formed on the inner sides of opposite surface portions 23b, 23c. Two flat portions 23f, 23g parallel to the fixed surface portion 23a project on the outer side of the opposite surface portion 23b, and as shown in Figure 15, the rib 13c of the abutting frame 13 abuts against the flat portion 23g.

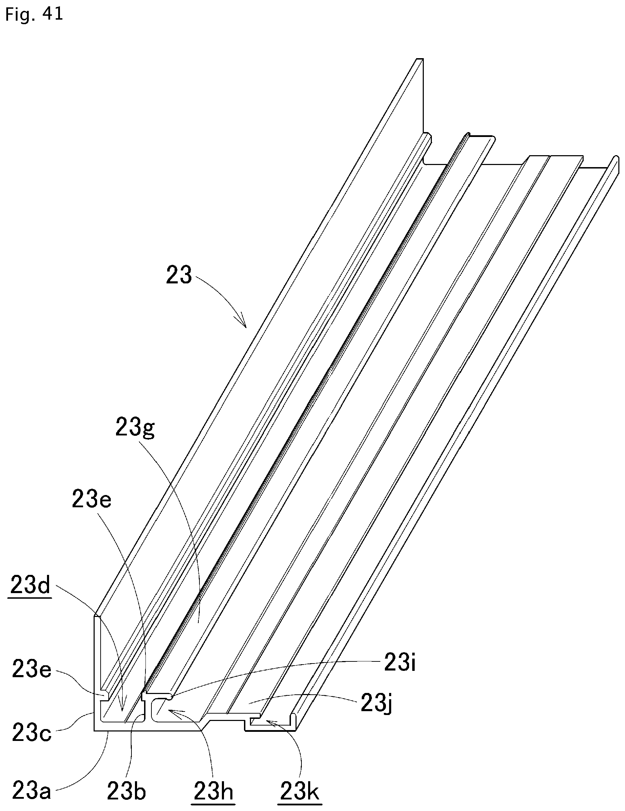

In the one-side-end base frame 23, when the planar shape of the polygonal panel 1 is the regular triangle, as shown in Figures 26 and 41, the space between the opposite surface portions 23b, 23c projecting from the fixed surface portion 23a to be fixed to the mounting surface 2, such as the wall surface, is formed as the gasket fitting groove 23d, the retaining ribs 23e, 23e of the gasket 15 are formed on the inner sides of opposite surface portions 23b, 23c, and the flat portion 23g parallel to the fixed surface portion 23a projects on the outer side of the opposite surface portion 23b. In the fitting groove 23h surrounded by the flat portion 23g, the fixed surface portion 23a, and the opposite surface portion 23b, as shown in Figure 26, when the mounting surface 2 is deformed due to an earthquake, a strong wind, or the like, the first rib 11d of the fitting portion 11 of the polygonal panel 1 slides on the flat portion 23g including a retaining rib 23i engaged with the first rib 11d at the outer end, and the inclined rib 11e of the fitting portion 11 slides on the fixed surface portion 23a, whereby the second rib 11f of the fitting portion 11 is attachable to and detachable from the opposite surface portion 23b. In the one-side-end base frame 23, a flat portion 23j parallel to the fixed surface portion 23a is extended on the outer side of the fixed surface portion 23a, and a drain groove 23k is formed on the outer side of the flat portion 23j. The drain groove 23k is designed to efficiently drain rainwater or the like that enters between the polygonal panel 1 and the mounting surface 2 in rainy weather or the like.

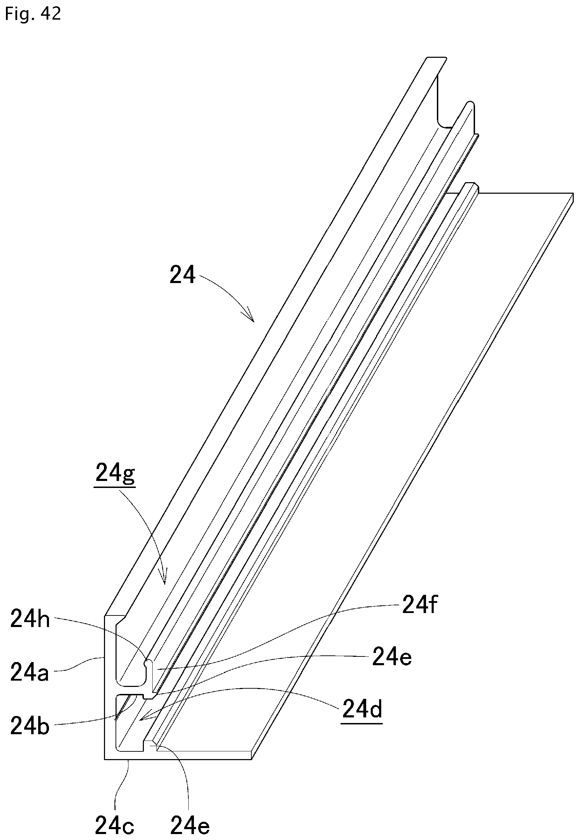

The other-side-end base frame 24 is used when the planar shape of the polygonal panel 1 is the regular quadrilateral. As shown in Figures 13 and 42, the space between opposite surface portions 24b, 24c projecting from a fixed surface portion 24a to be fixed to the mounting surface 2, such as the wall surface, is formed as a gasket fitting groove 24d, retaining ribs 24e, 24e of the gasket 15 are formed on the inner sides of opposite surface portions 24b, 24c, and a flat portion 24f parallel to the fixed surface portion 24a projects from the outer end of the opposite surface portion 24b. In the fitting groove 24g surrounded by the flat portion 24f, the fixed surface portion 24a, and the opposite surface portion 24b, when the mounting surface 2 is deformed due to an earthquake, a strong wind, or the like, the first rib 11d of the fitting portion 11 of the polygonal panel 1 slides on the flat portion 24f including a retaining rib 24h engaged with the first rib 11d at the outer end, and the inclined rib 11e of the fitting portion 11 slides on the fixed surface portion 24a, whereby the second rib 11f of the fitting portion 11 is attachable to and detachable from the opposite surface portion 24b.

In the implementation of the polygonal panel mounting structure according to the present invention, the procedure for mounting the polygonal panel 1 on the mounting surface 2, such as the wall surface, will be described as follows.

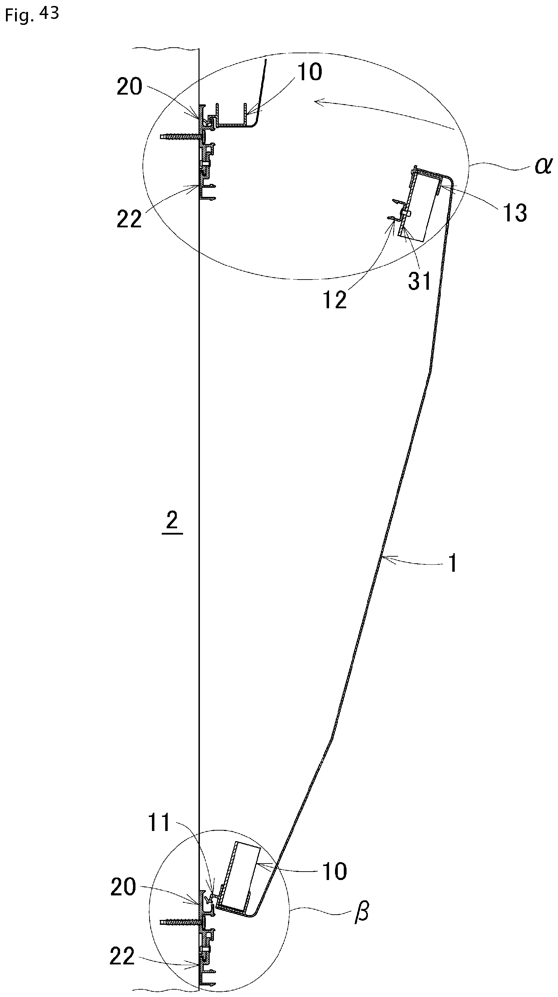

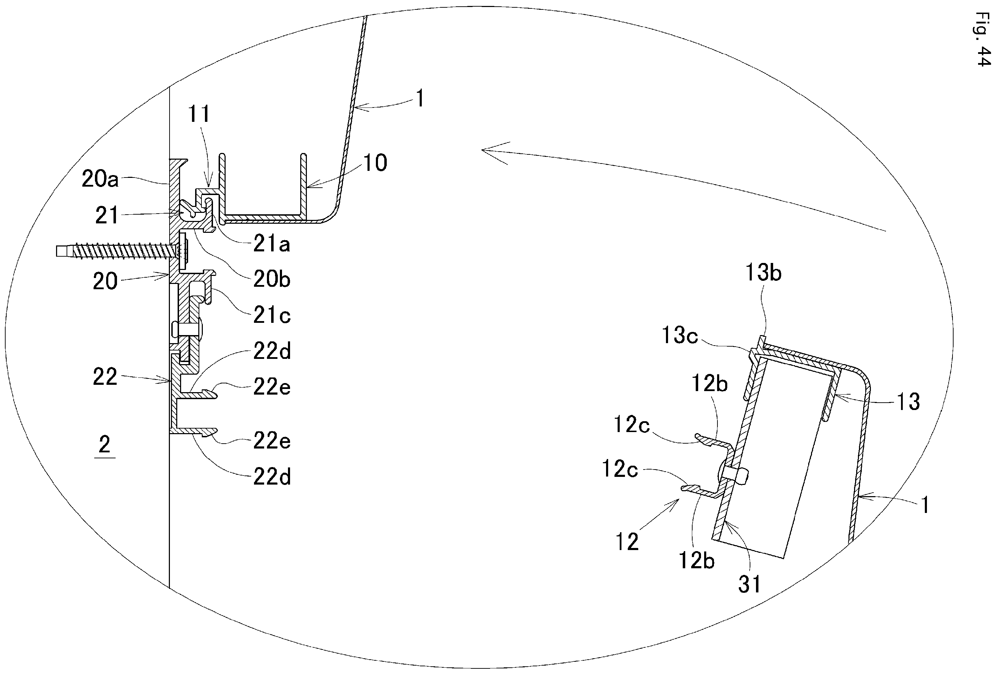

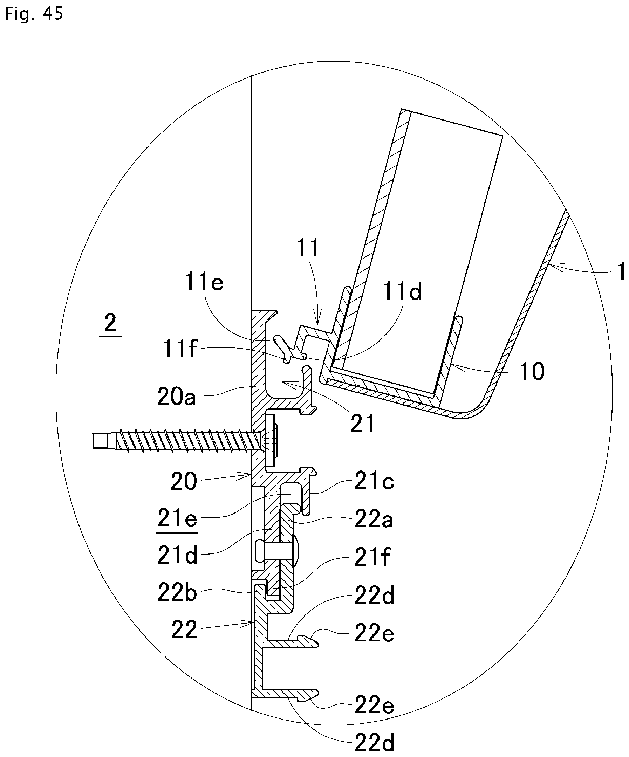

First, when the planar shape of the polygonal panel 1 is the regular quadrilateral, as shown in Figures 43 to 45, the polygonal panel 1 is set obliquely to the vertical direction in the figure, and the fitting portion 11 is loosely inserted into the fitting groove 21, provided in one of the furring strip base frames 20 fixed parallel to each other on the mounting surface 2, obliquely from above so that the inclined rib 11e of the fitting portion 11 of the fitting frame 10 slides on the fixed surface portion 20a of the furring strip base frame 20.

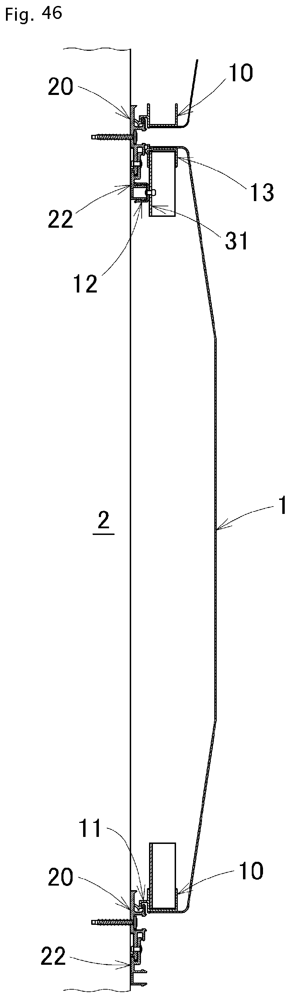

The polygonal panel 1 is rotated in the direction of the mounting surface 2, the abutting frame 13 approaches the other of the furring strip base frames 20 that are fixed to the mounting surface 2, parallel to each other. As shown in Figure 46, while the rib 13c of the abutting frame 13 abuts against the flat portion 21c of the furring strip base frame 20, the retaining ribs 12c, 12c of the fitting cap 12 are pressed against the retaining ribs 22d, 22d of the fitting receiver 22 that is provided on the furring strip base frame 20 so as to be swingable, whereby the fitting cap 12 is fitted into the fitting receiver 22 (cf. Figure 6).

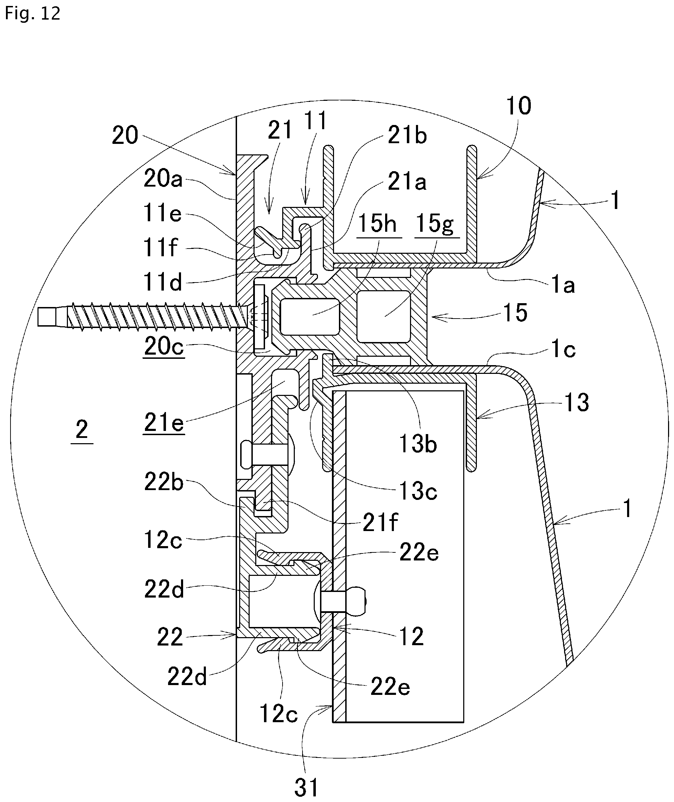

At the same time, the inclined rib 11e of the fitting portion 11 slides on the fixed surface portion 20a of the furring strip base frame 20, the first rib 11d slides on the flat portion 21a of the furring strip base frame 20, and the second rib 11f enter a state of being slightly separated from the opposite surface portion 20b of the furring strip base frame 20 (cf. Figures 7 and 12).

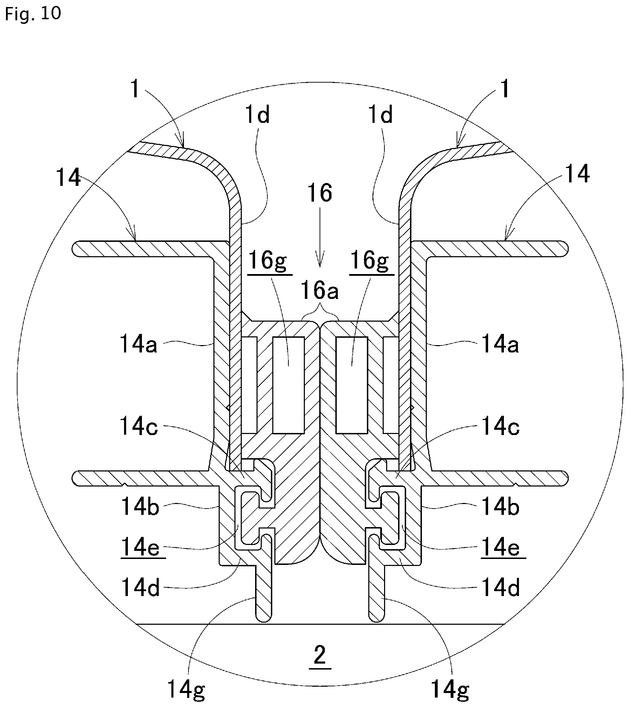

Further, the installation ribs 14g, 14g of the mating frames 14, 14 on the other side surfaces 1d, 1d of the polygonal panel 1 enter a state of being grounded to the mounting surface 2 (cf. Figures 9 and 10).

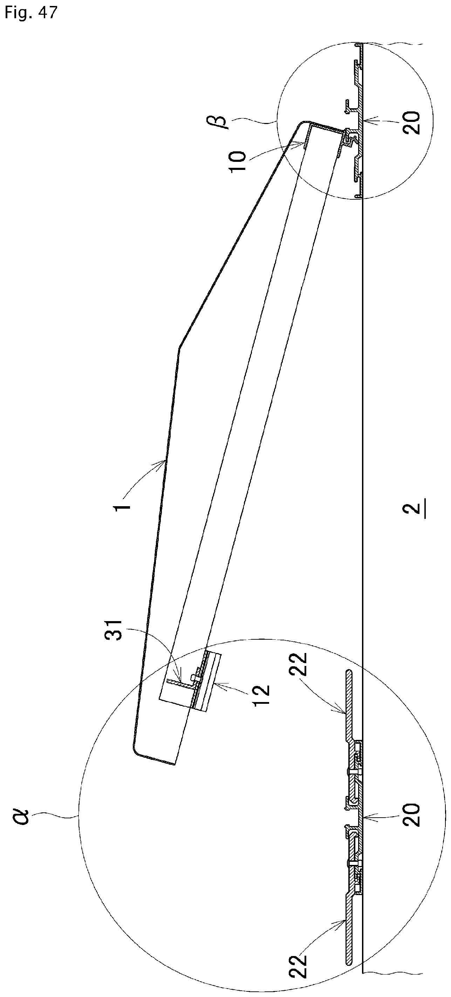

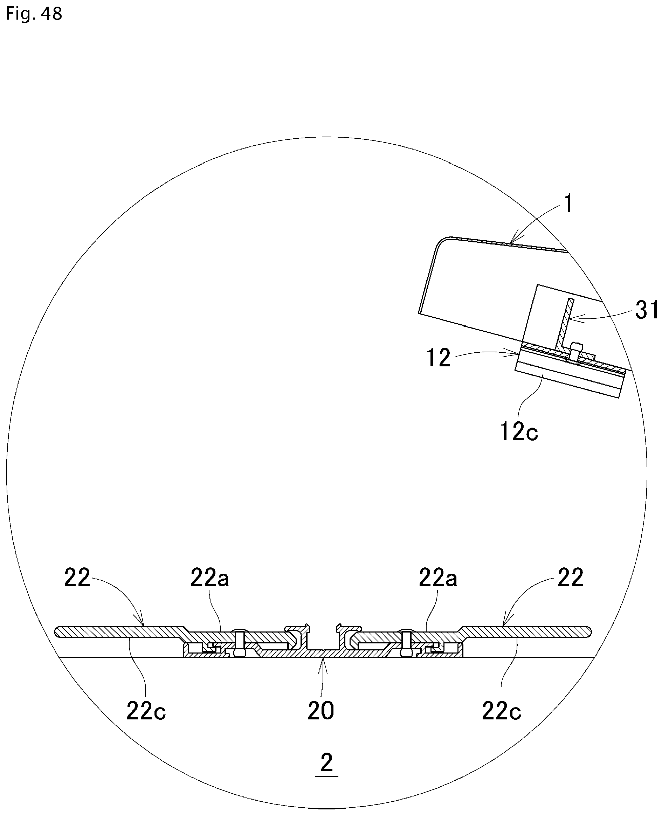

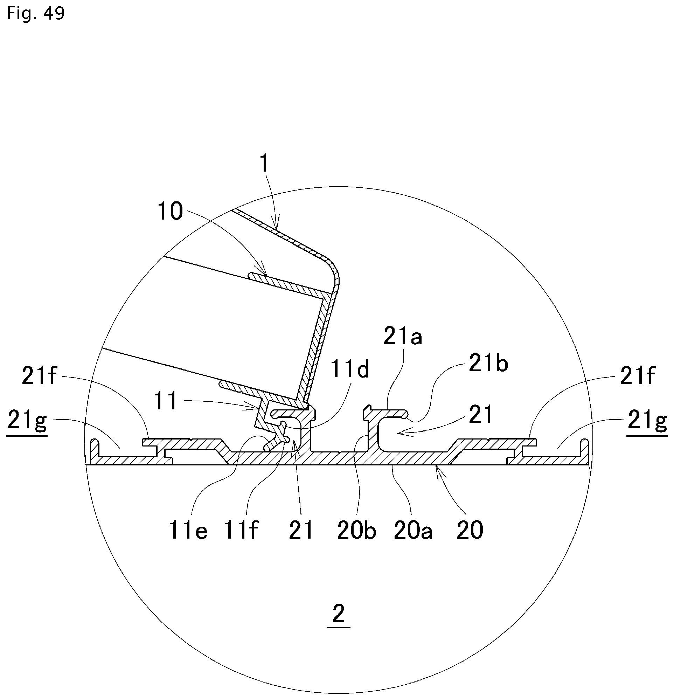

When the planar shape of the polygonal panel 1 is the regular triangle, as shown in Figures 47 to 49, the polygonal panel 1 is set obliquely to the left-right direction in the figure, and the fitting portion 11 of the fitting frame 10 is loosely inserted into the fitting groove 21, provided on one of the furring strip base frames 20 fixed perpendicularly to the mounting surface 2, obliquely from the side so that the inclined rib 11e of the fitting portion 11 slides on the fixed surface portion 20a of the furring strip base frame 20.

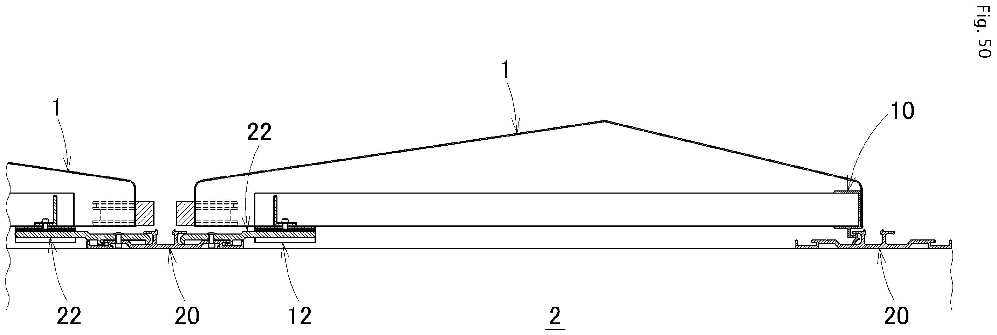

Then, the polygonal panel 1 is rotated in the direction of the mounting surface 2, the abutting frame 13 approaches the other of the furring strip base frames 20 fixed perpendicularly to the mounting surface 2. As shown in Figure 50, the retaining ribs 12c, 12c of the fitting cap 12 are pressed against the side parts 22e, 22e of the fitting receiver 22 that is provided on the furring strip base frame 20 so as to be swingable, whereby the fitting cap 12 is fitted in the fitting receiver 22 (cf. Figures 22, 25).

At the same time, the inclined rib 11e of the fitting portion 11 slides on the fixed surface portion 20a of the furring strip base frame 20, the first rib 11d slides on the flat portion 21a of the furring strip base frame 20, and the second rib 11f enter a state of being slightly separated from the opposite surface portion 20b of the furring strip base frame 20 (cf. Figure 23).

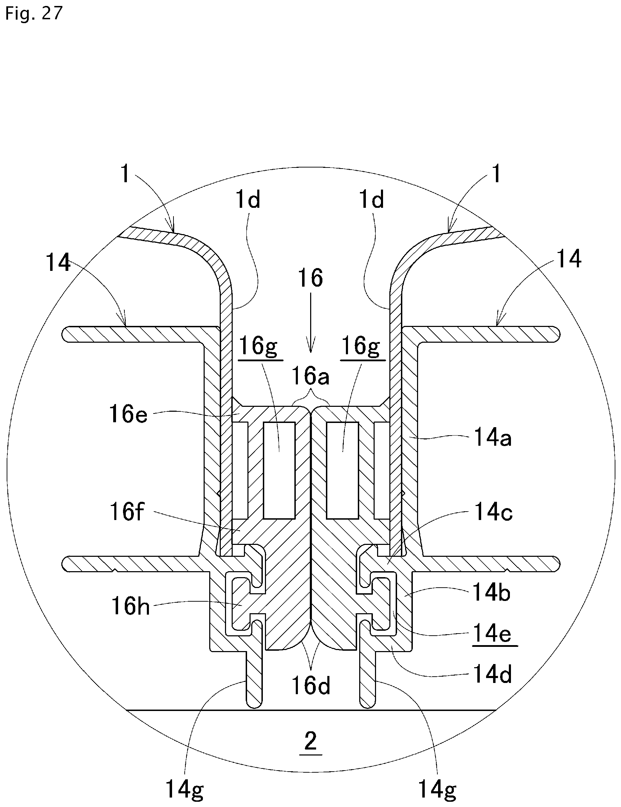

Further, the installation ribs 14g, 14g of the mating frames 14, 14 on the other side surfaces 1d, 1d of the polygonal panel 1 enter a state of being grounded to the mounting surface 2 (cf. Figure 27).

By repeating the work as described above, many polygonal panels 1 are mounted one by one on the mounting surface 2, such as the wall surface, and the mounting surface 2 is covered with many polygonal panels 1.

Such mounting work is very easy because a single worker can lift the polygonal panel 1 with both hands and fit the polygonal panel 1 to the furring strip base frame 20. Therefore, the mounting work can be performed by a single worker.

With respect to many polygonal panels 1 mounted on the mounting surface 2, until the second rib 11f of the fitting portion 11 reaches the opposite surface portion 20b of the furring strip base frame 20 from a state where the second rib 11f is separated from the opposite surface portion 20b, or until the first rib 11d hits the retaining rib 21b of the flat portion 21a, the fitting portion 11 of the fitting frame 10 can move in the fitting groove 21 of the furring strip base frame 20 and is in the state of being loosely fitted in the fitting groove 21.

Further, since the fitting cap 12 of the polygonal panel 1 is fitted to the fitting receiver 22 that is swingable, the polygonal panel 1 is also swingable in the fitted state.

When the planar shape of the polygonal panel 1 is the regular quadrilateral, the gasket 15, which is one member, is pressed between the upper and lower polygonal panels 1 in Figure 1, and as shown in Figures 6, 7, and 12, the retaining ribs 15d, 15e of the gasket 15 contact the one side portions 1a, 1c of the upper and lower polygonal panels 1, and the retaining rib 15f of the gasket 15 is fitted into the retaining rib 20d of the furring strip base frame 20, whereby many polygonal panels 1 are mounted on the mounting surface 2.

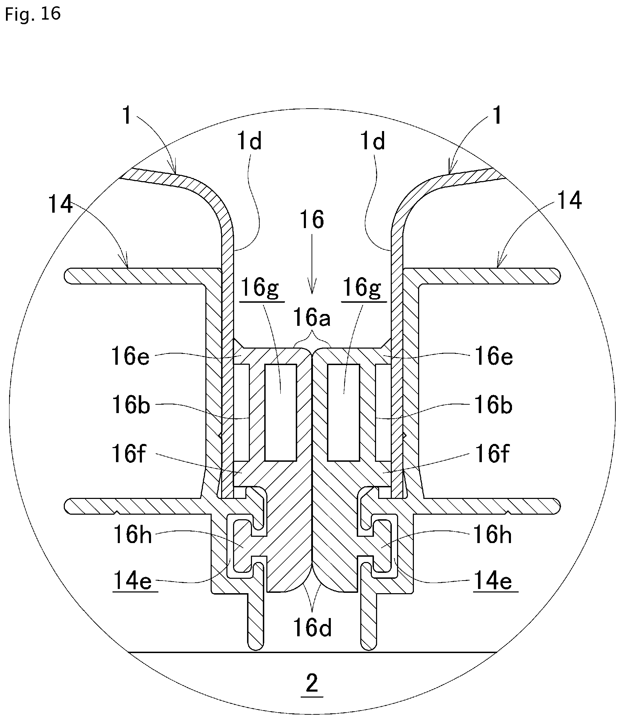

In Figure 1, the gasket 16 formed of two members is pressed between the left and right polygonal panels 1, with the contact surface portions 16c of the two members in contact with each other. More specifically, as shown in Figures 10 and 16, the retaining ribs 16e, 16f of the gasket 16 contact the other side portions 1d, 1d of the left and right polygonal panels 1, and the retaining rib 16h of the gasket 16 is attached in such a way that the retaining rib 16h is fitted into the groove portion 14e of the mating frame 14. Before the polygonal panel 1 is mounted on the mounting surface 2, the gasket 16 is attached to the polygonal panel 1 by inserting or fitting the retaining rib 16h into the groove portion 14e of the mating frame 14.

When the planar shape of the polygonal panel 1 is the regular triangle, in Figure 17, the gasket 15, which is one member, is pressed between the left and right polygonal panels 1. As shown in Figure 23, the retaining ribs 15d, 15e of the gasket 15 contact the one side portions 1a, 1a of the left and right polygonal panels 1, and the retaining rib 15f of the gasket 15 is fitted into the retaining rib 20d of the furring strip base frame 20, whereby many polygonal panels 1 are mounted to the mounting surface 2.

In Figure 17, the gasket 16 formed of two members is pressed between the upper and lower polygonal panels 1, with the contact surface portions 16c of the two members in contact with each other. Specifically, as shown in Figure 27, the retaining ribs 16e, 16f of the gasket 16 contact the other side portions 1d, 1d of the left and right polygonal panels 1, and the retaining rib 16h of the gasket 16 is attached in such a way that the retaining rib 16h is fitted into the groove portion 14e of the mating frame 14. Before the polygonal panel 1 is mounted on the mounting surface 2, the gasket 16 is attached to the polygonal panel 1 by inserting or fitting the retaining rib 16h into the groove portion 14e of the mating frame 14.

Further, with respect to the corner of the polygonal panel 1, in Figure 17, before the polygonal panel 1 is mounted on the mounting surface 2, the fitting groove 17c of the gasket 17, which is one member, is fitted and attached to each of the corners of the polygonal panels 1 facing each other across the furring strip base frame 20. When the polygonal panel 1 is mounted on the mounting surface 2, the fitting groove 17d of the gasket 17 is fitted and attached to the corner of the polygonal panel 1 adjacent to the polygonal panel 1.

Therefore, in the polygonal panel mounting structure according to the present invention, even when the mounting surface 2, such as the wall surface, is slightly deformed due to an earthquake, a strong wind, or the like, the fitting portion 11 of the fitting frame 10 can move in the fitting groove 21 of the furring strip base frame 20, the fitting cap 12 can swing, and the gaskets 15, 16, 17 are also elastically deformed. Accordingly, the polygonal panel 1 mounted on the mounting surface 2 can adapt to the deformation of the mounting surface 2, and no distortion occurs in each polygonal panel 1 mounted on the mounting surface 2.

### Reference Signs List

- 1: polygonal panel
- 1a: one side portion
- 1b: corner
- 2: mounting surface
- 10: fitting frame
- 10a: attachment surface portion
- 11: fitting portion
- 11a: first flat portion
- 11b: second flat portion
- 11c: third flat portion
- 11d: first rib
- 11e: inclined rib
- 11f: second rib
- 12: fitting cap
- 12a: attachment surface portion
- 12b: opposite surface portion
- 20: furring strip base frame
- 20a: fixed surface portion
- 20a: fixed surface portion
- 20b: opposite surface portion
- 21: fitting groove
- 21a: flat portion
- 21b: retaining rib
- 21e: fitting groove
- 22: fitting receiver
- 22a: insertion portion
- 22c: fitting surface portion

## Claims

1. A polygonal panel mounting structure, comprising a fitting frame (10), a plurality of furring strip base frames (20) a fitting cap (12) and a fitting receiver (22), wherein a fitting portion (11) of said fitting frame (10) is adapted to be provided on a one side portion (1a) of a polygonal panel (1) is loosely fitted into a fitting groove (21) provided on one of furring strip base frames (20) such that it can move in said fitting groove, wherein the furring strip base frames (20) are adapted to be fixed parallel to each other on a mounting surface (2) of the polygonal panel (1), **characterized in that** the fitting cap (12) is adapted to be provided at a corner (1b) facing the one side portion (1a) of the polygonal panel (1) and is fitted into said fitting receiver (22) provided on another of the furring strip base frames (20), wherein the fitting receiver (22) is supported pivotally by a rivet or the like on said another furring strip base frames (20), so as to be swingable in a mounted state of the polygonal panel (1).

2. The polygonal panel mounting structure according to claim 1, wherein
the fitting cap (12) is provided with opposite surface portions (12b, 12b) projecting parallel to each other in an elastically deformable manner from both side ends of an attachment surface portion (12a) that is attached to a corner (1b) of the polygonal panel (1), and
the fitting receiver (22) has an insertion portion (22a) to be inserted into the fitting groove (21, 21e) of the furring strip base frame (20), and the insertion portion (22a) is continuously connected to a fitting surface portion (22c) designed to be fitted between the opposite surface portions (12b, 12b) of the fitting cap (12).

3. The polygonal panel mounting structure according to claim 1 or 2, wherein
the fitting portion (11) of the fitting frame (10) includes a first flat portion (11a) projecting parallel to the mounting surface (2) of the polygonal panel (1) from an attachment surface portion (10a) to be attached to the polygonal panel (1), a second flat portion (11b) projecting at a right angle to the mounting surface (2) from the first flat portion (11a), and a third flat portion (11c) projecting at a right angle to a side end of the second flat portion (11b), the fitting portion (11) inwardly including, at an outer end of the third flat portion (11c), a first rib (11d) that projects parallel to the second flat portion (11b), the fitting portion (11) outwardly including, at the outer end of the third flat portion (11c), an inclined rib (11e) angled at 30 to 60 degrees with respect to the third flat portion (11c), and further including, at a base end of the inclined rib (11e), a second rib (11f) that projects at a right angle to the flat portion (11b), and
the fitting groove (21) of the furring strip base frame (20) is surrounded by a fixed surface portion (20a) to be fixed to the mounting surface (2), a flat portion (21a) parallel to the fixed surface portion (20a), and an opposite surface portion (20b) projecting from the fixed surface portion (20a), a retaining rib (21b) engaged with the first rib (11d) of the fitting portion (11) is provided at an outer end of the flat portion (21a), the first rib (11d) slides on the flat portion (21a), the inclined rib (11e) of the fitting portion (11) slides on the fixed surface portion (20a), and the second rib (11f) of the fitting portion (11) is attachable to and detachable from the opposite surface portion (20b).

## Patentansprüche

1. Montagestruktur für ein polygonales Paneel, mit einem Passrahmen (10), einer Mehrzahl von Konterlattungs-Basisrahmen (20), einer Passabdeckung (12) und einer Passaufnahme (22), wobei ein Passabschnitt (11) des Passrahmens (10), welcher dafür ausgelegt ist, auf einem Seitenabschnitt (1a) von einem polygonalen Paneel (1) angeordnet zu sein, lose in eine Passnut (21) eingepasst ist, welche auf einem von den Konterlattungs-Basisrahmen (20) angeordnet ist, so dass sich dieser in der Passnut bewegen kann, wobei die Konterlattungs-Basisrahmen (20) derart ausgelegt sind, dass sie parallel zueinander auf einer Montageoberfläche (2) des polygonalen Paneels (1) befestigt sein können, **dadurch gekennzeichnet, dass** die Passabdeckung (12) derart ausgelegt ist, dass sie an einer Ecke (1b) angeordnet sein kann, welche dem einen Abschnitt (1a) des polygonalen Paneels (1) gegenüberliegt, und in die Passaufnahme (22) eingepasst ist, welche auf einem weiteren von den Konterlattungs-Basisrahmen (20) angeordnet ist, wobei die Passaufnahme (22) durch einen Niet oder dergleichen auf dem weiteren der Konterlattungs-Basisrahmen (22) schwenkbar gelagert ist, so dass sie in einem montierten Zustand des polygonalen Paneels (1) schwingen kann.

2. Montagestruktur für ein polygonales Paneel nach Anspruch 1, wobei die Passabdeckung (12) mit einander gegenüberliegenden Oberflächenbereichen (12b, 12b) versehen ist, welche parallel zueinander in elastisch verformbarer Weise von beiden Seitenenden von einem Anbringungsoberflächenabschnitt (12a) vorstehen, welcher an einer Ecke(1b) des polygonalen Paneels (1) angebracht ist, und wobei die Passaufnahme (22) einen Einfügeabschnitt (22a) aufweist, welcher in die Passnut (21, 21e) des Konterlattungs-Basisrahmens (20) eingefügt werden soll, und wobei der Einfügeabschnitt (22a) durchgehend mit einem Passoberflächenabschnitt (22c) verbunden ist, welcher dazu konzipiert ist, zwischen die einander gegenüberliegenden Oberflächenabschnitten (12b, 12b) der Passabdeckung (12) gepasst zu werden.

3. Montagestruktur für ein polygonales Paneel nach Anspruch 1 oder 2, wobei der Passabschnitt (11) des Passrahmens (10) einen ersten flachen Abschnitt (11a), welcher parallel zu der Montageoberfläche (2) des polygonalen Paneels (1) von einem Anbringungsoberflächenabschnitt (10a) vorsteht, welcher an dem polygonalen Paneel (1) angebracht werden soll, einen zweiten flachen Abschnitt (11b), welcher in einem rechten Winkel zu der Montageoberfläche (2) von dem ersten flachen Abschnitt (11a) vorsteht, und einen dritten flachen Abschnitt (11c) beinhaltet, welcher in einem rechten Winkel zu einem seitlichen Ende des zweiten flachen Abschnitts (11b) vorsteht, wobei der Passabschnitt (11) nach innen gerichtet, an einem äußeren Ende des dritten flachen Abschnitts (11c), eine erste Rippe (11d) beinhaltet, welche parallel zu dem zweiten flachen Abschnitt (11b) vorsteht, wobei der Passabschnitt (11) nach außen gerichtet, an dem äußeren Ende des dritten flachen Abschnitts (11c), eine geneigte Rippe (11e) beinhaltet, welche um 30 bis 60 Grad in Bezug auf den dritten flachen Abschnitt (11c) abgewinkelt ist, und ferner, an einem Basisende der geneigten Rippe (11e), eine zweite Rippe (11f) beinhaltet, welche in einem rechten Winkel zu dem flachen Abschnitt (11b) vorsteht, und wobei die Passnut (21) des Konterlattungs-Basisrahmens (20) umgeben ist von einem befestigten Oberflächenabschnitt (20a), welcher an der Montageoberfläche (2) befestigt werden soll, einem flachen Abschnitt (21) parallel zu dem befestigen Oberflächenabschnitt (20a) und einem gegenüberliegenden Oberflächenabschnitt (20b), welcher von dem befestigen Oberflächenabschnitt (20a) vorsteht, wobei eine Sicherungsrippe (21b), welche mit der ersten Rippe (11d) des Passabschnitts (11) in Eingriff steht, an einem äußeren Ende des flachen Abschnitts (21a) angeordnet ist, die erste Rippe (11d) auf dem flachen Abschnitt (21a) gleitet, die geneigte Rippe (11e) des Passabschnitts (11) auf dem befestigten Oberflächenabschnitt (20a) gleitet und die zweite Rippe (11f) des Passabschnitts (11) an dem gegenüberliegenden Oberflächenabschnitt (20b) angebracht und von diesem gelöst werden kann.

## Revendications

1. Une structure de montage de panneau polygonal, comprenant un cadre de fixation (10), une pluralité de cadres de base à lattes (20), un capuchon de fixation (12) et un récepteur de fixation (22), dans laquelle une partie de fixation (11) dudit cadre de fixation (10) est adaptée pour être prévue sur une partie latérale (1a) d'un panneau polygonal (1) et est montée de manière lâche dans une rainure de fixation (21) prévue sur l'un des cadres de base à lattes (20) de manière à pouvoir se déplacer dans ladite rainure de montage, dans laquelle les cadres de base à lattes (20) sont adaptés pour être fixés parallèlement les uns aux autres sur une surface de montage (2) du panneau polygonal (1),
**caractérisée en ce que** le capuchon de fixation (12) est adapté pour être prévu au niveau d'un coin (1b) faisant face à la partie latérale (1a) du panneau polygonal (1) et est inséré dans ledit récepteur de fixation (22) prévu sur un autre des cadres de base à lattes (20), dans laquelle le récepteur de fixation (22) est supporté de manière pivotante par un rivet ou similaire sur ledit autre cadre de base à lattes (20), de manière à pouvoir pivoter dans un état monté du panneau polygonal (1).

2. La structure de montage de panneau polygonal selon la revendication 1, dans laquelle
le capuchon de fixation (12) est muni de parties de surface opposées (12b, 12b) faisant saillie parallèlement l'une à l'autre de manière élastiquement déformable à partir des deux extrémités latérales d'une partie de surface de fixation (12a) qui est fixée à un coin (1b) du panneau polygonal (1), et
le récepteur de fixation (22) comporte une partie d'insertion (22a) destinée à être insérée dans la rainure de fixation (21, 21e) du cadre de base à lattes (20), et la partie d'insertion (22a) est reliée de manière continue à une partie de surface de fixation (22c) conçue pour être ajustée entre les parties de surface opposées (12b, 12b) du capuchon de fixation (12).

3. La structure de montage de panneau polygonal selon la revendication 1 ou 2, dans laquelle
la partie de fixation (11) du cadre de fixation (10) comprend une première partie plate (11a) faisant saillie parallèlement à la surface de montage (2) du panneau polygonal (1) à partir d'une partie de surface de fixation (10a) destinée à être fixée au panneau polygonal (1), une deuxième partie plate (11b) faisant saillie à angle droit par rapport à la surface de montage (2) à partir de la première partie plate (11a), et une troisième partie plate (11c) faisant saillie à angle droit par rapport à une extrémité latérale de la deuxième partie plate (11b), la partie de fixation (11) comprenant vers l'intérieur, à une extrémité extérieure de la troisième partie plate (11c), une première nervure (11d) qui fait saillie parallèlement à la deuxième partie plate (11b), la partie de fixation (11) comprenant vers l'extérieur, à l'extrémité extérieure de la troisième partie plate (11c), une nervure inclinée (11e) formant un angle de 30 à 60 degrés par rapport à la troisième partie plate (11c), et comprenant en outre, à une extrémité de base de la nervure inclinée (11e), une deuxième nervure (11f) qui fait saillie à angle droit par rapport à la partie plate (11b), et
la rainure de fixation (21) du cadre de base à lattes (20) est entourée par une partie de surface fixe (20a) destinée à être fixée à la surface de montage (2), une partie plate (21a) parallèle à la partie de surface fixe (20a), et une partie de surface opposée (20b) faisant saillie à partir de la partie de surface fixe (20a), une nervure de retenue (21b) engagée avec la première nervure (11d) de la partie de fixation (11) est prévue à une extrémité extérieure de la partie plate (21a), la première nervure (11d) coulisse sur la partie plate (21a), la nervure inclinée (11e) de la partie de fixation (11) coulisse sur la partie de surface fixe (20a), et la deuxième nervure (11f) de la partie de fixation (11) peut être fixée à la partie de surface opposée (20b) et en être détachée.
